# EUROPEAN PATENT APPLICATION

(11) **EP 1 548 627 A1**
(43) Date of publication of application: **29.06.2005**
(21) Application number: 03795346.0
(22) Date of filing: 10.09.2003
(51) Int. Cl.: G06F 17/60

(54) **SERVICE PROVIDING SYSTEM, INFORMATION PROCESSING DEVICE, METHOD, AND PROGRAM**

(30) Priority: 10.09.2002 JP 2002264772
(71) Applicant: Sony Corporation, Tokyo 141-0001 (JP)
(72) Inventor: FUKUDA, Junko, Sony Corporation, Tokyo 141-0001 (JP); NAKANO, Hiroaki, Sony Corporation, Tokyo 141-0001 (JP); KARASAWA, Hidenori, Sony Corporation, Tokyo 141-0001 (JP); IKEDA, Takuo, Sony Corporation, Tokyo 141-0001 (JP); KANNO, Ryuta, Sony Corporation, Tokyo 141-0001 (JP); SUEYOSHI, Takahiko, Sony Corporation, Tokyo 141-0001 (JP); MURATA, Makoto, Sony Corporation, Tokyo 141-0001 (JP); GOTO, Hiroshi, Sony Corporation, Tokyo 141-0001 (JP); AMEMIYA, Ryoji, Sony Corporation, Tokyo 141-0001 (JP); TAMAI, Hiroki, Sony Corporation, Tokyo 141-0001 (JP)
(74) Representative: Körber, Martin, Dipl.-Phys.
(86) International application number: PCT/JP2003/011534
(87) International publication number: WO 2004/025532

(57) **Abstract**

The present invention relates to a service providing system, an information processing apparatus, an information processing method, and a program. An information processing apparatus (base unit) 2 receives user information detected by sensors provided in an information processing apparatus (remote unit) 3 from the information processing apparatus (remote unit) 3, acquires article information of articles sold in a shop from a shop-information portal site server 5, selects an article to be recommended to a user based on the acquired user information and article information, and transmits the article information of the selected article to the information processing apparatus (remote unit) 3. The information processing apparatus (remote unit) 3 displays the received article information in, for example, a display to recommend the article. The present invention can be applied to an electronic apparatus connected to a network.

## Description

### Technical Field

The present invention relates to service providing systems, information processing apparatuses, information processing methods, and programs. More particularly, the present invention relates a service providing system, an information processing apparatus, an information processing method, and a program, which are capable of reducing leakage of the private information of a user.

### Background Art

A system that provides useful information to a user transmits article information and sale information of a shop by wireless to a distribution area within a predetermined distance from the information terminal of the shop and, when the user who carries a mobile terminal enters the distribution area, automatically receives the article information and the sale information to store the received information. The system has separate means for searching the information by a consumer (for example, refer to Japanese Unexamined Patent Application Publication No. 2000-276532 (pages 5 to 7)). A system registers an article desired by a user in advance and raises an alarm when a shop has the article desired by the user (also refer to Japanese Unexamined Patent Application Publication No. 2000-276532 (pages 5 to 7)).

A system presents advertisement information to be presented to an driver of a mobile body in a form of at least one of an image and a sound, depending on the situation of the mobile body, in order to allow the driver of the mobile body, who wants to use the advertisement information, to watch and listen to the advertisement information in a more secure situation. The system uses a global positioning system (GPS) to determine the position of the mobile body and presents the advertisement information of a shop when the mobile body reaches an area within a distance of, for example, 2 km from the shop (for example, refer to Japanese Unexamined Patent Application Publication No. 2000-292182 (pages 4 to 5)).

In a system having elements and nodes, which constitute the system, connected thereto over a network, a cyber-entity (hereinafter referred to as a CE), which is a program executed by the nodes, acquires information input by a user; history information of the user; real world information (information concerning the user, such as the position of the user or the biological information, the concentration of nitrogen gas in the air, humidity, opening/closing of a door, the water level of a pot, turning on/off of an electric lamp, wind speed, water depth, electric conductivity, luminance, odor, a traffic situation, the freshness of food, room temperature, and/or precipitation) acquired by using a sensor; attribute information of the CE; and so on (environmental sensing), and acquires information concerning other CEs (B) by the environmental sensing. The CE generates and records relationship information of the CEs (B) based on the acquired information concerning the CEs (B), and selects a target CE to be interacted with based on the relationship information to provide a service while interacting with the target CE (for example, refer to Japanese Unexamined Patent Application Publication No. 2002-175405 (pages 9 to 11)).

A system stores the characteristics of a shop where a base terminal computer is installed in the base terminal computer as base terminal device profile. In this system, when the mobile terminal computer of a user is connected to the base terminal computer, the user profile is transmitted to the terminal device computer and is updated so as to reflect the base terminal device profile of the base terminal computer in order to reflect the preference of the user in the user profile and to be accommodated to the user's interest that dynamically varies (for example, refer to Japanese Unexamined Patent Application Publication No. 2002-117066 (pages 12 to 13)).

However, with known systems, there is a problem in that the private information of a user must be provided to the outside when the information suited to the preference of the user is recommended to the user.

For example, in the system disclosed in the Japanese Unexamined Patent Application Publication No. 2002-117066 (pages 12 to 13), the user profile must be transmitted from the mobile terminal computer to the base terminal computer.

Accordingly, the transmission can result in leakage of the private information of the user.

### Disclosure of Invention

In order to resolve the above problem, it is an object of the present invention is to reduce leakage of the private information of a user.

A service providing system of the present invention includes a first information processing apparatus that acquires user information, which is the information concerning a user, a second information processing apparatus that accumulates information and provides the accumulated information on a network, and a third information processing apparatus which the user carries along with the first information processing apparatus. The first information processing apparatus includes acquiring means for acquiring the user information; first communication means for transmitting the user information acquired by the acquiring means to the third information processing apparatus and receiving presentation information to be presented to the user from the third information processing apparatus; and presenting means for presenting the presentation information received by the first communication means. The second information processing apparatus includes second communication means for transmitting the accumulated information to the third information processing apparatus. The third information processing apparatus includes third communication means for receiving the user information from the first information processing apparatus; fourth communication means for receiving the accumulated information from the second information processing apparatus; and selecting means for selecting the presentation information from among the accumulated information based on the user information. The third communication means transmits the presentation information selected by the selecting means to the first information processing apparatus.

An information processing apparatus according to a first aspect of the present invention includes acquiring means for acquiring user information, which is the information concerning a user; communication means for transmitting the user information acquired by the acquiring means to another information processing apparatus and receiving presentation information to be presented to the user from the other information processing apparatus; and presenting means for presenting the presentation information received by the communication means. The user carries the information processing apparatus along with the other information processing apparatus.

The acquiring means may include a GPS antenna. The user information may include information concerning the longitude and latitude of a location of the user.

The acquiring means may include a microphone. The user information may include audio information spoken by the user.

The presentation information may include article information of an article expected to be desired by the user.

The presenting means may include displaying means for displaying the presentation information.

The presenting means may include outputting means for outputting a sound associated with the presentation information.

The communication means may perform communication with the other information processing apparatus using a Bluetooth technology.

The information processing apparatus may further include attracting means for attracting the user's attention to the information processing apparatus when the presenting means presents the presentation information.

An information processing method according to the first aspect of the present invention includes the steps of acquiring user information, which is the information concerning a user; transmitting the user information acquired in the acquiring step to another information processing apparatus; receiving presentation information to be presented to the user from the other information processing apparatus; and presenting the presentation information received in the receiving step.

A program according to the first aspect of the present invention causes a computer to perform the steps of acquiring user information, which is the information transmitted to an information processing apparatus and which is the information concerning a user; and presenting presentation information to be presented to the user when the presentation information is received from the information processing apparatus.

An information processing apparatus according to a second aspect of the present invention includes communication means for receiving information concerning the location of a user from another information processing apparatus that selects presentation information to be presented to the user from among accumulated information that is held by the information processing apparatus and that includes article information of articles sold in a shop; and acquiring means for acquiring the article information of the articles sold in the shop where the user is located based on the information concerning the location of the user received by the communication means. The communication means transmits the article information acquired by the acquiring means to the other information processing apparatus.

The information processing apparatus may further include generating means for generating routing information for guiding the user to a specified location. The communication means may further transmit the routing information generated by the generating means to the other information processing apparatus.

An information processing method according to the second aspect of the present invention includes the steps of receiving information concerning a location of a user from another information processing apparatus that selects presentation information to be presented to the user from among accumulated information that is held by an information processing apparatus and that includes article information of articles sold in a shop; acquiring the article information of the articles sold in the shop where the user is located based on the information concerning the location of the user, received in the receiving step; and transmitting the article information acquired in the acquiring step to the other information processing apparatus.

A program according to the second aspect of the present invention causes a computer to perform an acquiring step of acquiring article information of articles sold in a shop where a user is located as information to be transmitted to another information processing apparatus that selects presentation information to be presented to the user from among accumulated information that is held in an information processing apparatus and that includes the article information of the articles sold in the shop, based on information concerning the location of the user, when the information concerning the location of the user is received from the other information processing apparatus.

An information processing apparatus according to a third aspect of the present invention includes first communication means for receiving user information, which is the information concerning a user, from another first information processing apparatus; second communication means for receiving accumulated information accumulated in another second information processing apparatus from the other second information processing apparatus; and selecting means for selecting presentation information to be presented to the user from among the accumulated information based on the user information. The first communication means transmits the presentation information selected by the selecting means to the first information processing apparatus.

The user information may include information concerning the longitude and latitude of a location of the user.

The user information may include audio information spoken by the user, acquired by the other first information processing apparatus. The information processing apparatus may further include analyzing means for analyzing the audio information.

The selecting means may select the presentation information to be presented to the user from among the accumulated information based on the analysis result in the analyzing means.

The accumulated information may include article information of articles sold in a shop. The selecting means may select an article expected to be desired by the user from among the articles sold in the shop based on the article information of the articles sold in the shop. The article information of the selected article may be the presentation information.

The information processing apparatus may further include determining means for determining whether the user is present in the shop. The selecting means may select the article expected to be desired by the user from among the articles sold in the shop where the user is present, determined by the determining means.

The first communication means may perform communication with the other first information processing apparatus using a Bluetooth technology.

The information processing apparatus may further include storage means for storing the user information received by the first communication means and the accumulated information received by the second communication means.

An information processing method according to the third aspect of the present invention includes a first receiving step of receiving user information, which is the information concerning a user, from another first information processing apparatus; a second receiving step of receiving accumulated information accumulated in another second information processing apparatus from the other second information processing apparatus; a selecting step of selecting presentation information to be presented to the user from among the accumulated information based on the user information; and a transmitting step of transmitting the presentation information selected in the selecting step to the first information processing apparatus.

A program according to the third aspect of the present invention causes a computer to perform a selecting step of selecting presentation information to be presented to a user by a first information processing apparatus from among accumulated information that is received from another second information processing apparatus and that is accumulated in the other second information processing apparatus, based on user information which is received from the other first information processing apparatus and which is the information concerning the user.

In the service providing system of the present invention, the first information processing apparatus acquires user information, which is the information concerning a user, and transmits the acquired user information to the third information processing apparatus. The third information processing apparatus receives presentation information to be presented to the user and presents the received presentation information. The second information processing apparatus transmits accumulated information held therein to the third information processing apparatus. The third information processing apparatus selects the presentation information from among the accumulated information received from the second information processing apparatus based on the user information received from the first information processing apparatus and transmits the selected presentation information to the first information processing apparatus.

In the first information processing apparatus, information processing method, and program of the present invention, the user information, which is the information concerning the user, is acquired and is transmitted to another information processing apparatus. The presentation information received from the other information processing apparatus is presented to the user. The user carries the first information processing apparatus according to the first aspect of the present invention along with the other information processing apparatus.

In the second information processing apparatus, information processing method, and program of the present invention, the information concerning the location of the user is received from another information processing apparatus that selects the presentation information to be presented to the user from among the accumulated information that is held in the information processing apparatus and that includes article information of articles sold in a shop, and the article information of the articles sold in the shop where the user is located is acquired based on the received information concerning the location of the user. The acquired article information is transmitted to the other information processing apparatus.

In the third information processing apparatus, information processing method, and program of the present invention, the presentation information to be presented to the user by the first information processing apparatus is selected from among the accumulated information which is received from the other second information processing apparatus and which is accumulated in the other second information processing apparatus, based on the user information which is received from the other first information processing apparatus and which is the information concerning the user.

### Brief Description of the Drawings

Fig. 1 illustrates the structure of a service providing system of the present invention.
Fig. 2 illustrates an example in which a remote unit is mounted to a base unit in Fig. 1.
Fig. 3 illustrates an example in which the remote unit is removed from the base unit in Fig. 1.
Fig. 4 illustrates examples of the shape and size of the remote unit in Fig. 1.
Fig. 5 illustrates examples of the appearance and the internal structure of the remote unit in Fig. 1.
Fig. 6 illustrates an example of the external structure of the remote unit in Fig. 1.
Fig. 7 is a block diagram showing an example of the electrical structure inside the remote unit in Fig. 1.
Fig. 8 illustrates examples of the shape and size of the base unit in Fig. 1.
Fig. 9 is a block diagram showing an example of the electrical structure inside the base unit in Fig. 1.
Fig. 10 is a block diagram showing the structure of a shop-information portal site server in Fig. 1.
Fig. 11 is a block diagram showing the structure of a stock management server in Fig. 1.
Fig. 12 is a block diagram showing the structure of a positional information service server in Fig. 1.
Fig. 13 is a flowchart illustrating the overview of a process of providing a service in the service providing system of the present invention.
Fig. 14 is a flowchart illustrating a process of providing user information in the remote unit and a process of acquiring the user information in the base unit.
Fig. 15 is a flowchart illustrating a process of providing the user information in the remote unit and a process of acquiring the user information in the base unit, which are different from the processes shown in Fig. 14.
Fig. 16 is a flowchart illustrating a process of acquiring database information in the base unit and a process of providing the database information in the shop-information portal site server.
Fig. 17 a flowchart illustrating a process of acquiring database information in the base unit and a process of providing the database information in the shop-information portal site server, which are different from the processes shown in Fig. 16.
Fig. 18 is a flowchart illustrating a process of transmitting GPS information in the remote unit.
Fig. 19 is a flowchart illustrating a process of recommending an article based on positional information in the base unit.
Fig. 20 is a flowchart illustrating the process of recommending the article based on the positional information in the remote unit, subsequent to the flowchart in Fig. 19.
Fig. 21 is a flowchart illustrating a process of providing the positional information in the positional information service server.
Fig. 22 is a flowchart illustrating a process of providing article information in the shop-information portal site server.
Fig. 23 is a flowchart illustrating a process of providing stock information in the stock management server.
Fig. 24 is a flowchart illustrating a process of presenting information in the remote unit.
Fig. 25 is a flowchart illustrating a process of confirming recommendation in the remote unit.
Fig. 26 is a flowchart illustrating a process of providing routing information in the positional information service server.
Fig. 27 is a flowchart illustrating a route guiding process in the remote unit.
Fig. 28 is a flowchart illustrating a process of purchasing an article.
Fig. 29 is a flowchart illustrating a process of transmitting audio information in the remote unit.
Fig. 30 is a flowchart illustrating a process of recommending an article based on the audio information in the base unit.
Fig. 31 is a flowchart illustrating the process of recommending an article based on the audio information in the base unit, subsequent to the flowchart in Fig. 30.
Fig. 32 is a flowchart illustrating a process of providing the article information in the shop-information portal site server.
Fig. 33 is a flowchart illustrating a process of providing area information.
Fig. 34 shows an example in which the remote unit is used.
Fig. 35 shows an example of an image picked up by an imaging unit in the remote unit.
Fig. 36 shows an example of the display in a display in the remote unit.
Fig. 37 is a flowchart illustrating a process of providing a special picture.

### Best Mode for Carrying Out the Invention

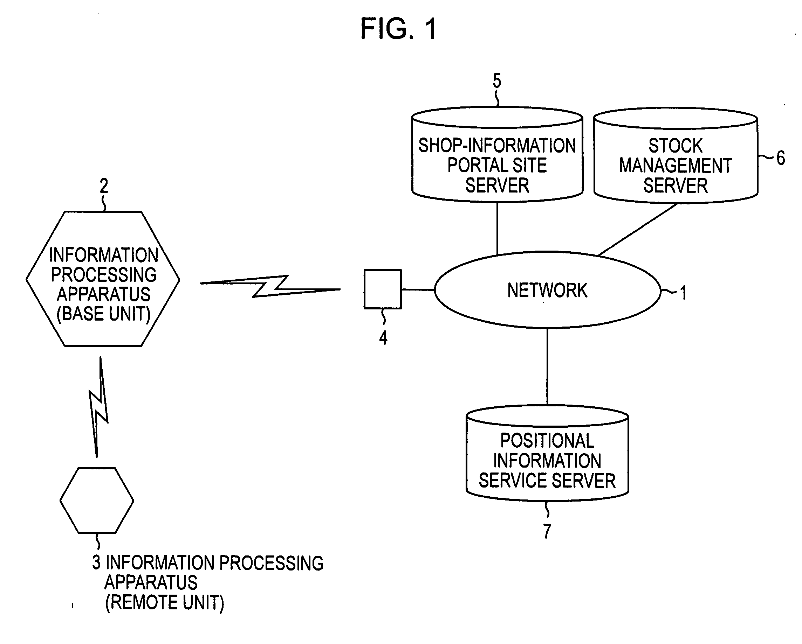

Fig. 1 shows an example of the structure of a service providing system of the present invention. Although a case in which article information of articles sold in a shop is provided to a user is described in the following description, this does not mean that the present invention is limited to the provision of the article information. That is, profitable information which the service providing system of the present invention provides to the user may be information other than the article information.

In the service providing system in Fig. 1, an access point 4, a shop-information portal site server 5, a stock management server 6, and a positional information service server 7 are connected to a network 1 including the Internet. An information processing apparatus 2 performs wireless communication over a wireless local area network (LAN) with the access point 4 and is connected to the network 1 through the access point 4. An information processing apparatus 3 performs communication with the information processing apparatus 2 using a Bluetooth technology. The information processing apparatus 3 may communicate with the information processing apparatus 2 over the wireless LAN.

The shop-information portal site server 5 provides article information of articles sold in shops (for example, the names, sizes, colors, prices, and/or characteristics of the articles) and others over the network 1. The shop-information portal site server 5 has at least one shop registered therein and provides the article information sold in the registered shop over the network 1.

The stock management server 6 manages stock information of the articles that are sold in the shops registered in the shop-information portal site server 5. The positional information service server 7 associates objects (for example, shops, companies, parks, and rivers) located at predetermined longitudes and latitudes on a map with the corresponding longitudes and the latitudes and stores the associated objects. When the information concerning a longitude and latitude is specified, the positional information service server 7 determines an object located at the specified longitude and latitude. When the positional information service server 7 receives the longitude and latitude of the current position of the user and the longitude and latitude of a destination, the positional information service server 7 determines the route from the current position of the user to the destination, generates routing information used for guiding the user to the destination, and transmits the generated routing information to the information processing apparatus (base unit) 2. The base unit 2 may have the information in the positional information service server 7 and may generate the routing information instead of the positional information service server 7.

The user receiving a service from the service providing system of the present invention carries the information processing apparatus 2 and the information processing apparatus 3 as one set. The information processing apparatus 2 is hereinafter also referred to as the base unit 2. The information processing apparatus 3 is hereinafter also referred to as a remote unit 3. The remote unit 3, which has a sensor for acquiring multiple different pieces of information, acquires the information concerning the user through the sensor and transmits the acquired information to the base unit 2. The remote unit 3 also has a function as electronic money. When the user pays the price using the remote unit 3, the remote unit 3 transmits, to the base unit 2, purchase information including the name, price, and purchase date and time of an article purchased by the user.

The base unit 2 acquires, from the positional information service server 7, the information concerning an object (for example, a shop, a company, a park, or a river) located at the current position of the user. When the user is located at, for example, a shop, or when the user is located near the shop, the base unit 2 acquires the article information of the articles sold in the shop from the shop-information portal site server 5 over the network. In addition, the base unit 2 acquires the information concerning the user and the purchase information from the remote unit 3. The base unit 2 selects an article according to the user preference based on the article information supplied from the shop-information portal site server 5, the information concerning the user, supplied from the remote unit 3, and the purchase information, transmits the article information of the selected article to the remote unit 3, and causes the user to recommend the selected article.

Furthermore, the base unit 2 notifies the positional information service server 7 of the longitude and latitude of the current position of the user and the destination, and acquires the routing information used for guiding the user to the destination from the positional information service server 7. The base unit 2 then causes the remote unit 3 to present the acquired routing information. As described above, the base unit 2 may have the information in the positional information service server 7 and may generate the routing information instead of the positional information service server 7.

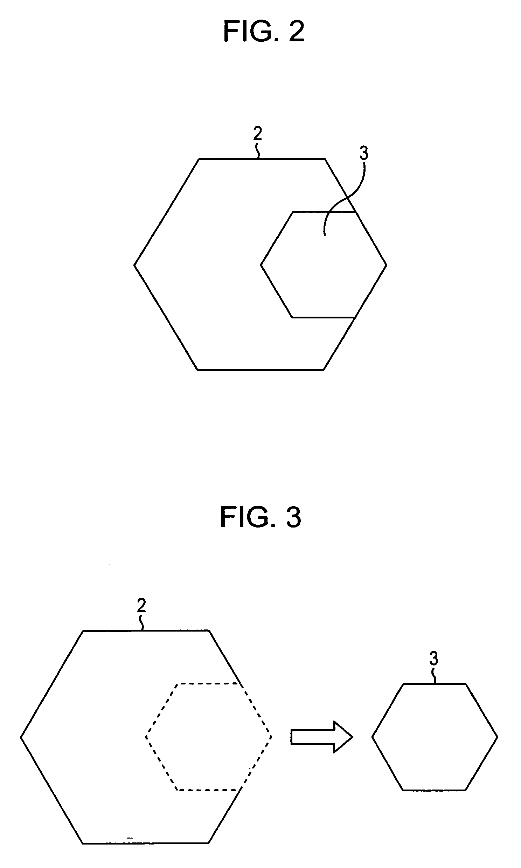

The remote unit 3 is removable from the base unit 2. Figs. 2 and 3 illustrate how the remote unit 3 is removed from the base unit 2. Fig. 2 illustrates a state in which the remote unit 3 is mounted in the base unit 2. The base unit 2 and the remote unit 3 each have, for example, a substantially hexagonal shape. The remote unit 3 is mounted in the base unit 2 such that one corner of the remote unit 3 is superposed on one corner of the base unit 2, as shown in Fig. 2.

Fig. 3 shows an example illustrating how the remote unit 3 is removed from the base unit 2. As shown in Fig. 3, the remote unit 3 is removable from the base unit 2. The base unit 2 and the remote unit 3 each have a size allowing the user to carry the base unit 2 and the remote unit 3. The user can carry the base unit 2, for example, in his/her bag or the like. The user can hold the remote unit 3 in his/her hand.

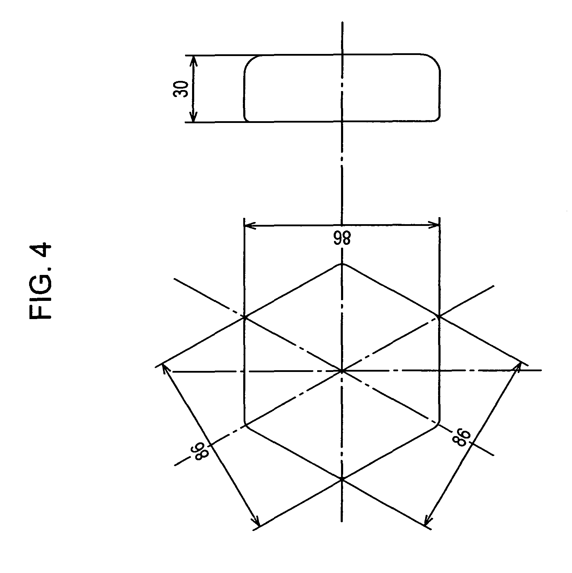

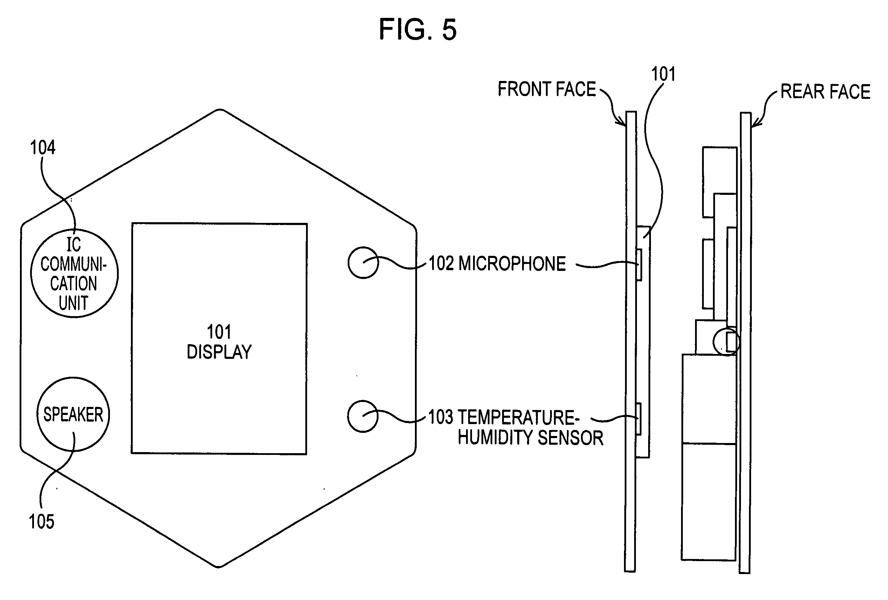

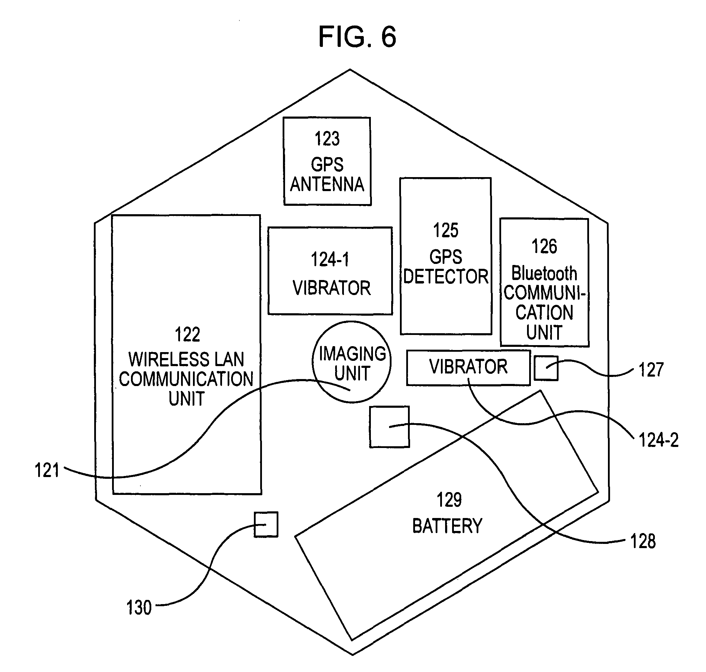

Fig. 4 shows an example of the size of the remote unit 3. As shown in Fig. 4, the remote unit 3 has a distance of 86 mm between the opposing sides and a thickness of about 30 mm. This size allows the user to hold the remote unit 3 in his/her hand. Fig. 5 shows examples of the appearance and the internal structure of the remote unit 3. An example of the appearance of the remote unit 3 is shown in the left half of Fig. 5 and an example of the internal structure of the remote unit 3 is shown in the right half of Fig. 5. As shown in the left half of Fig. 5, the remote unit 3 has, on its front face, a display 101 for displaying various directions and pictures picked up by an imaging unit 121 (refer to Fig. 6); a microphone 102 for collecting sounds; a temperature-humidity sensor 103 for measuring the ambient temperature and humidity; an integrated circuit (IC) communication unit 104 for use in transmission and reception of information to and from an IC card reader-writer in a contact mode or a non-contact mode; and a speaker 105 used for outputting the sounds. The display 101 is, for example a liquid crystal display (LCD).

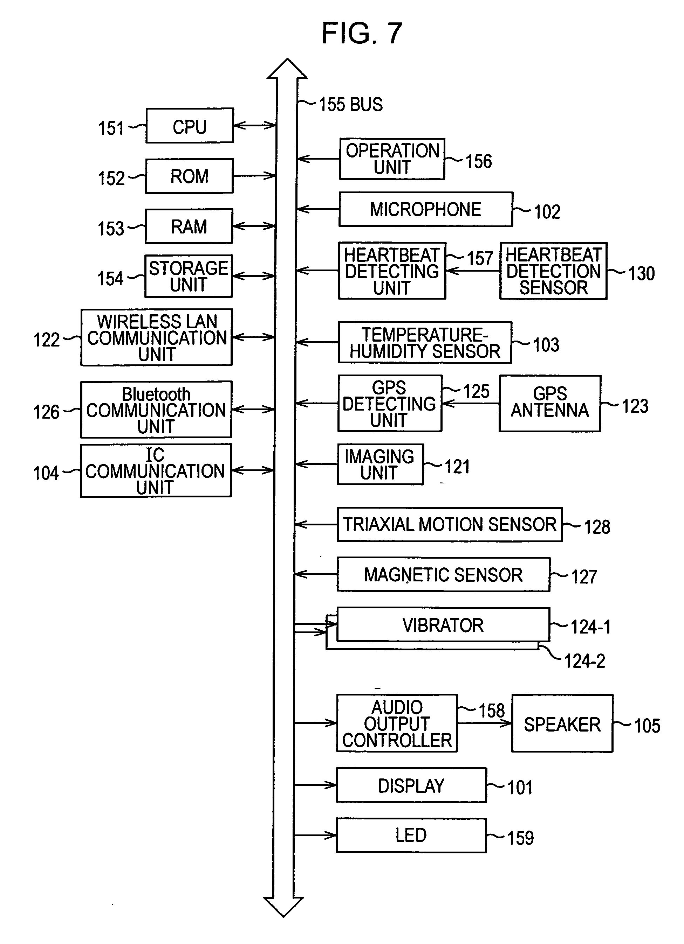

The IC communication unit 104 makes payment by electronic money through the communication with, for example, the IC card reader-writer. Although not shown in Fig. 5, a light emitting diode (LED) 159 (refer to Fig. 7) is also arranged on the front face of the remote unit 3. As shown in the right half of Fig. 5, the face on which the display 101 of the remote unit 3 is provided is referred to as the front face while the face opposing the front face is referred to the rear face in the following description.

Fig. 6 shows an example of the arrangement of components on the inner side of the rear face of the remote unit 3. As shown in Fig. 6, the remote unit 3 has the imaging unit 121, a wireless LAN communication unit 122, a GPS antenna 123, vibrators 124-1 and 124-2, a GPS detecting unit 125, a Bluetooth communication unit 126, a magnetic sensor 127, a triaxial motion sensor 128, a battery 129, and a heartbeat detection sensor 130, provided on the inner side of the rear face thereof.

The imaging unit 121 includes an imager, such as a charged coupled device (CCD) or a complementary metal oxide semiconductor (CMOS), and picks up an image of an object around the remote unit 3. The imager is provided on the surface side of the rear face of the remote unit 3. The wireless LAN communication unit 122 performs communication over the wireless LAN. The GPS antenna 123 receives a satellite signal transmitted from an artificial satellite for position measurement and supplies the received satellite signal to the GPS detecting unit 125. The vibrators 124-1 and 124-2, each including a small motor, are provided so as to be orthogonal to each other and vibrate vertically and horizontally. The GPS detecting unit 125 calculates the longitude and latitude or the like of the current position of the remote unit 3 based on the satellite signal supplied from the GPS antenna 123. In the following description, the information concerning the longitude and latitude or the like, detected by the GPS detecting unit 125, is also referred to as GPS information.

The Bluetooth communication unit 126 transmits and receives information to and from the base unit 2 or the like using the Bluetooth technology. The magnetic sensor 127 magnetically reads information. The triaxial motion sensor 128 detects a three-dimensional attitude angle of the remote unit 3 in real time. The battery 129 supplies power to each component of the remote unit 3. The heartbeat detection sensor 130 is a sensor for detecting the heart rate of the user.

Fig. 7 is a block diagram showing an example of the electrical structure inside the remote unit 3. The description of the parts that have already been described is appropriately omitted.

A central processing unit (CPU) 151 controls the operation of each component of the remote unit 3 and performs a variety of processing in accordance with programs stored in a read only memory (ROM) 152 or programs loaded from a storage unit 154 into a random access memory (RAM) 153. Data required by the CPU 151 in order to perform the variety of processing is also stored in the RAM 153.

The CPU 151, the ROM 152, and the RAM 153 are connected to each other via a bus 155. The storage unit 154, the wireless LAN communication unit 122, the Bluetooth communication unit 126, the IC communication unit 104, an operation unit 156, the microphone 102, a heartbeat detecting unit 157, the temperature-humidity sensor 103, the GPS detecting unit 125, the imaging unit 121, the triaxial motion sensor 128, the magnetic sensor 127, the vibrators 124-1 and 124-2, an audio output controller 158, the display 101, and the LED 159 are also connected to the bus 155.

The operation unit 156 has types of buttons, a jog dial, and others. The user operates the operation unit 156. The heartbeat detecting unit 157 calculates the heart rate of the user based on the signal supplied from the heartbeat detection sensor 130. The audio output controller 158 causes the speaker 105 to output a sound corresponding to the supplied audio information (electrical signal). The LED 159 emits light in order to attract the user's attention to the remote unit 3, for example, in the presentation of information to the user.

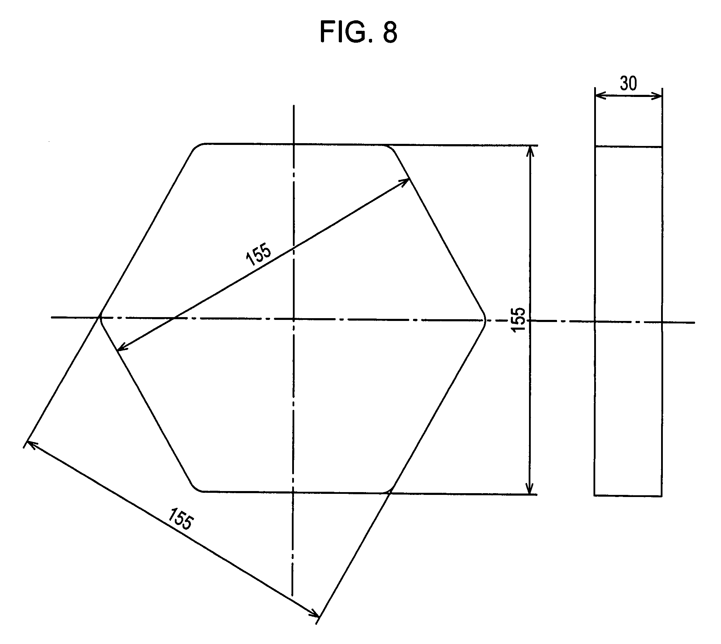

Fig. 8 shows an example of the size of the base unit 2. As shown in Fig. 8, the base unit 2 has a distance of 155 mm between the opposing sides and a thickness of about 30 mm. This size allows the user to store the base unit 2 in, for example, a bag and to carry the base unit 2.

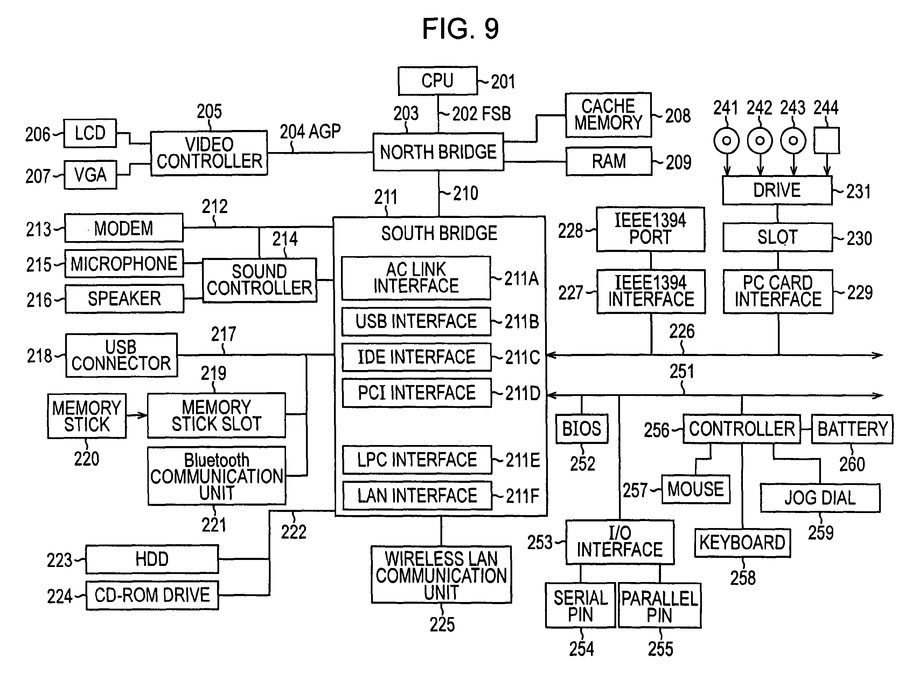

Fig. 9 shows an example of the electrical structure inside the base unit 2. Referring to Fig. 9, a CPU 201 is, for example, a Pentium (registered trademark) processor of Intel Corporation and is connected to a front side bus (FSB) 202. A north bridge 203 is connected to the FSB 202. The north bridge 203 has an accelerated graphics port (AGP) 204 and is connected to a hub interface 210.

The north bridge 203 is, for example, 440BX, which an AGP host bridge controller of Intel Corporation, and controls the CPU 201, a random access memory (RAM) 209 (so-called main memory), and so on. The north bridge 203 further controls a video controller 205 via the AGP 204. The video controller 205 controls an LCD 206 or a video graphics array (VGA) display (hereinafter referred to as a VGA 207).

The video controller 205 receives data (image data or text data) supplied from the CPU 201 to generate image data corresponding to the received data or to store the received data in its internal video memory (not shown). The video controller 205 causes the LCD 206 or the VGA 207 to display the image corresponding to the image data stored in the video memory. The LCD 206 or the VGA 207 displays an image or a character based on the data supplied from the video controller.

The north bridge 203 is also connected to a cache memory 208. The cache memory 208 is a memory capable of performing writing or reading at a higher rate, compared with the RAM 209, which is, for example, a static RAM (SRAM), and caches (temporarily stores) the program or data used by the CPU 201.

The CPU 201 includes a primary cache which is capable of operating at a higher rate than the cache memory 208 and which the CPU 201 controls.

The RAM 209 is, for example, a dynamic RAM (DRAM) and stores the program executed by the CPU 201 or the data required for the operation by the CPU 201. Specifically, the RAM 204 stores an operating system loaded from a hard disk drive (HDD) 223 or an Internet program on completion of the activation.

The operation system (operating system (OS), which is typified by, for example, Windows XP (registered trademark) of Microsoft Corporation or Mac OS (registered trademark) of Apple Computer Inc., is a program for controlling basic operations of the computer.

The north bridge 203 is also connected to a south bridge 211 via the hub interface 210. The south bridge 211 is, for example, PIIX4E of Intel Corporation and includes an AC link interface 211A, a universal serial bus (USB) interface 211B, an integrated drive electronics (IDE) interface 211C, a peripheral component interconnect (PCI) interface 211D, a low pin count (LPC) interface 211E, an LAN interface 211F, and so on.

The south bridge 211 performs various input-output (I/O) controls. For example, the south bridge 211 controls devices connected thereto via an AC link bus 212, a USB bus 217, or an IDE bus 222.

A modem 213 and a sound controller 214 are connected to the AC link bus 212. When the modem 213 is connected to a public switched network, the modem 213 performs communication over the public switched network or the Internet, which is not shown. The sound controller 214 captures a sound with a microphone 215 to generate the data corresponding to the sound and supplies the data to the RAM 209. The sound controller 214 also drives a speaker 216 to cause the speaker 216 to output a sound.

A USB connector 218 is connected to the USB bus 217 of the south bridge 211. Various USB devices can be connected to the USB connector 218. A memory stick slot 219 and a Bluetooth communication unit 221 are connected to the south bridge 211 through the USB bus 217. A memory stick (registered trademark) 220 is connected to the memory stick slot 219.

The memory stick 220 is a type of a flash memory card developed by Sony Corporation, which is the applicant of the present invention. The memory stick 220 is manufactured by housing a flash memory device, which is a type of an electrically erasable and programmable read only memory (EEPROM), in a small and thin case made of plastic. The EEPROM is a non-volatile memory capable of being electrically rewritten or erased. A variety of data concerning images, sounds, and music can be written to or read from the memory stick 220 through a 10-pin terminal.

The Bluetooth communication unit 221 performs communication conforming to the Bluetooth standard. The USB interface 211B is used to transmit data to external devices connected through the USB bus 217 and receive data from the devices.

The IDE interface 221C includes two IDE controllers, that is, a primary IDE controller and a secondary IDE controller, a configuration register, and so on, which are not shown in Fig. 9.

The HDD 223 is connected to the primary IDE controller through the IDE bus 222. When a so-called IDE device, such as a CD-ROM device 224 or an HDD (not shown), is mounted to another IDE bus, the mounted IDE device is electrically connected to the secondary IDE controller.

A wireless LAN communication unit 225 is connected to the network in wireless LAN communication, such as IEEE802.11a or IEEE802.11b. Data is transmitted to and received from the network connected to the wireless LAN communication unit 225 through the LAN interface 211F.

A basic input output system (BIOS) 252, an input-output (I/O) interface 253, and a controller 256 are connected to an LPC bus 251. The BIOS 252 is a group of programs in which basic operation instructions of the base unit 2 are collected and is stored in, for example a read only memory (ROM). The BIOS 252 controls data passing (input and output) between the OS or an application program and peripheral devices.

The I/O interface 253, to which a serial pin 254 and a parallel pin 255 are connected, passes data to devices connected to the serial pin 254 and the parallel pin 255. A jog dial 259 and a battery 260 are connected to the controller 256. A keyboard 258 and a mouse 257 may be connected to the controller 256.

A PC card interface 229 and an IEEE1394 interface 227 are connected to a PCI bus 226. The PC card interface 229 supplies data supplied from a device (card) connected to the a slot 230 to the CPU 201 or the RAM 209, and outputs data supplied from the CPU 201 to the card connected to the PC card slot. A drive 231 may be connected to the PCI bus 226 through a slot 33 and a PC card interface 78.

The drive 231 reads out data stored in a magnetic disk 241, an optical disk 242, a magneto-optical disk 243, or a semiconductor memory 244, which is inserted into the drive 231, and supplies the readout data to the RAM 209. The drive 231 also stores data generated in the processing in the CPU 201 in the magnetic disk 241, the optical disk 242, the magneto-optical disk 243, or the semiconductor memory 244, which is inserted into the drive 231.

The IEEE1394 interface 227 transmits and receives data conforming to IEEE1394 standard (data stored in a packet) through an IEEE1394 port 228.

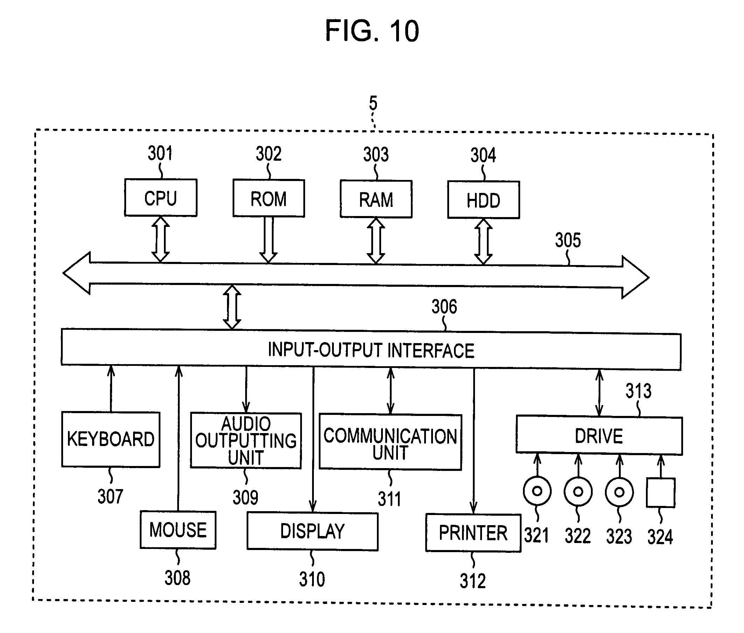

Fig. 10 shows an example of the internal structure of the shop-information portal site server 5. Referring to Fig. 10, a CPU 301 performs a variety of processing in accordance with programs stored in a ROM 302 or programs loaded from an HDD 304 into a RAM 303. Data which the CPU 301 requires to perform the variety of processing is also stored in the RAM 303.

The CPU 301, the ROM 302, the RAM 303, and the HDD 304 are connected to each other through a bus 305. An input-output interface 306 is also connected to the bus 305.

A keyboard 307; a mouse 308; an audio outputting unit 309, such as a speaker; a display 310, such as a cathode ray tube (CRT) or an LCD; a communication unit 311 including a modem, a terminal adaptor, and so on; and a printer 312 are connected to the input-output interface input-output interface 306. The communication unit 311 performs communication processing over the network 1 including the Internet.

A drive 313 is also connected to the input-output interface 306, if required. A magnetic disk 321, an optical disk 322, a magneto-optical disk 323, or a semiconductor memory 324 are appropriately inserted into the drive 313. Computer programs read from the magnetic disk 321, the optical disk 322, the magneto-optical disk 323, or the semiconductor memory 324 are installed in the HDD 304, if required.

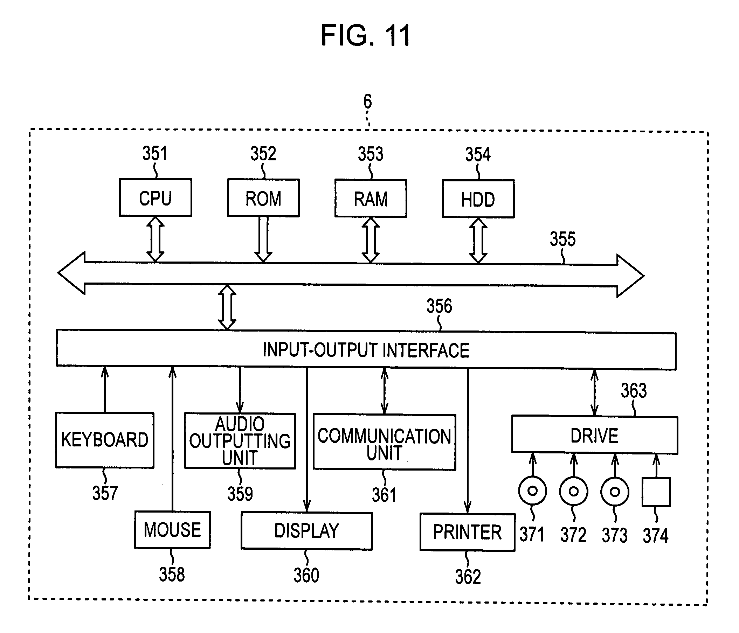

Fig. 11 shows an example of the internal structure of the stock management server 6. Components from a CPU 351 to a semiconductor memory 374 in the stock management server 6 has basically the same structure as the components from the CPU 301 to the semiconductor memory 324 in the shop-information portal site server 5, shown in Fig. 10. The components having the same name have the same functions. Accordingly, a description of the components is omitted here.

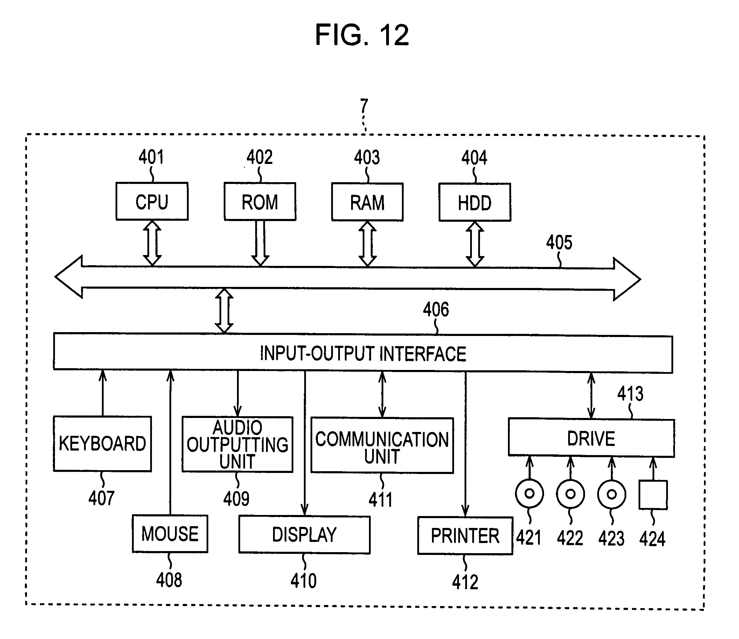

Fig. 12 shows an example of the internal structure of the positional information service server 7. Components from a CPU 401 to a semiconductor memory 424 in the positional information service server 7 has basically the same structure as the components from the CPU 301 to the semiconductor memory 324 in the shop-information portal site server 5, shown in Fig. 10. The components having the same name have the same functions. Accordingly, a description of the components is omitted here.

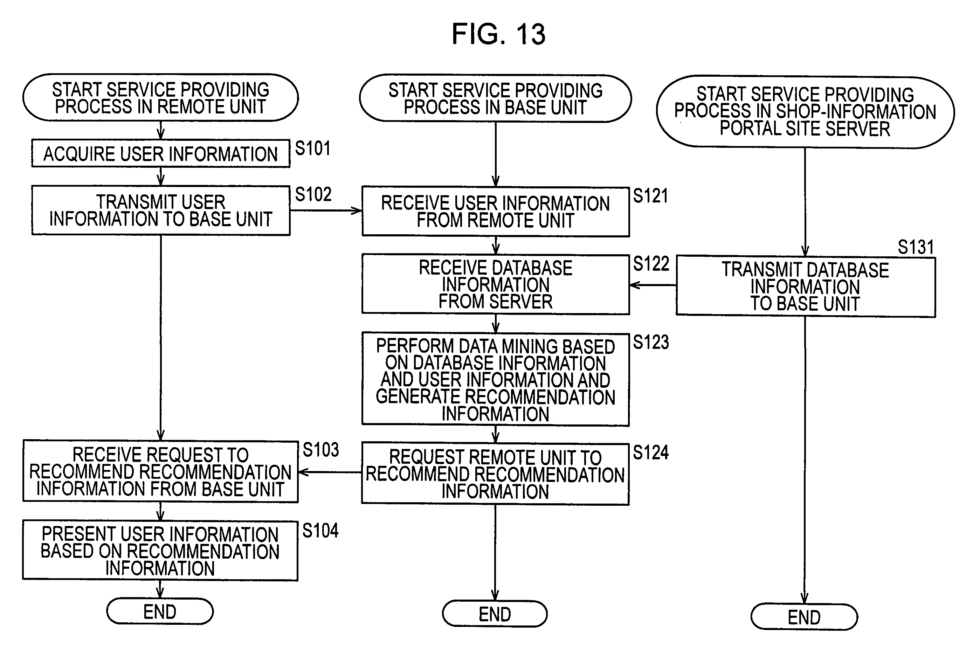

The summary of the service providing system of the present invention will now be described with reference to the flowchart in Fig. 13. Fig. 13 shows a service providing process in the service providing system of the present invention.

Referring Fig. 13, in Step S101, the CPU 151 in the remote unit 3 acquires information supplied from the sensors including the microphone 102, the heartbeat detecting unit 157, the temperature-humidity sensor 103, the GPS detecting unit 125, the imaging unit 121, the triaxial motion sensor 128, and the magnetic sensor 127 or purchase information of an article, when payment is performed through the IC communication unit 104. The information supplied from the sensors and the purchase information are hereinafter also collectively referred to as user information.

In Step S102, the CPU 151 in the remote unit 3 transmits the user information acquired in Step S101 to the base unit 2 through the Bluetooth communication unit 126.

In Step S121, the CPU 201 in the base unit 2 receives the user information transmitted by the remote unit 3 in Step S102 through the Bluetooth communication unit 221 and stores the received user information in the HDD 223.

The shop-information portal site server 5 stores a database including the information concerning the articles sold in the shop in the HDD 304. In Step S131, the CPU 301 in the shop-information portal site server 5 transmits the information stored in the database (hereinafter also referred to as database information) to the base unit 2 through the communication unit 311.

In Step S122, the CPU 201 in the base unit 2 receives the database information transmitted by the shop-information portal site server 5 in Step S131 through the wireless LAN communication unit 225 and stores the received database information in the HDD 223.

In Step S123, the CPU 201 in the base unit 2 performs data mining based on the user information received and stored in Step S121 and the database information received and stored in Step S122 to select information anticipated being useful to the user. The CPU 201 then generates information to be recommended to the user (the information recommended to the user is hereinafter also referred to as recommendation information) based on the selected information. An existing method, such as a genetic algorithm or AI, is used in the data mining.

Learning in the operation history (or the sensing history) of the user with the remote unit 3, the purchase of articles, and the operation history, such as Web browsing, of the user with the base unit 2 in the data mining can draw inference better suited to the preference or interesting of the user. The data mining based on the operation history of the user may be performed at a timing other than the timing when the user information is received from the remote unit 3 (Step S123). For example, the operation history of the user may be accumulated in advance for a predetermined time for the learning in the data mining.

In Step S124, the CPU 201 in the base unit 2 requests, through the Bluetooth communication unit 221, the remote unit 3 to recommend the recommendation information generated in Step S123.

In Step S103, the CPU 151 in the remote unit 3 receives the request for the recommendation of the recommendation information from the base unit 2 through the Bluetooth communication unit 126. In Step S104, the CPU 151 in the remote unit 3 presents the information to the user in response to the request received in Step S103.

The service providing process is performed in the manner described above.

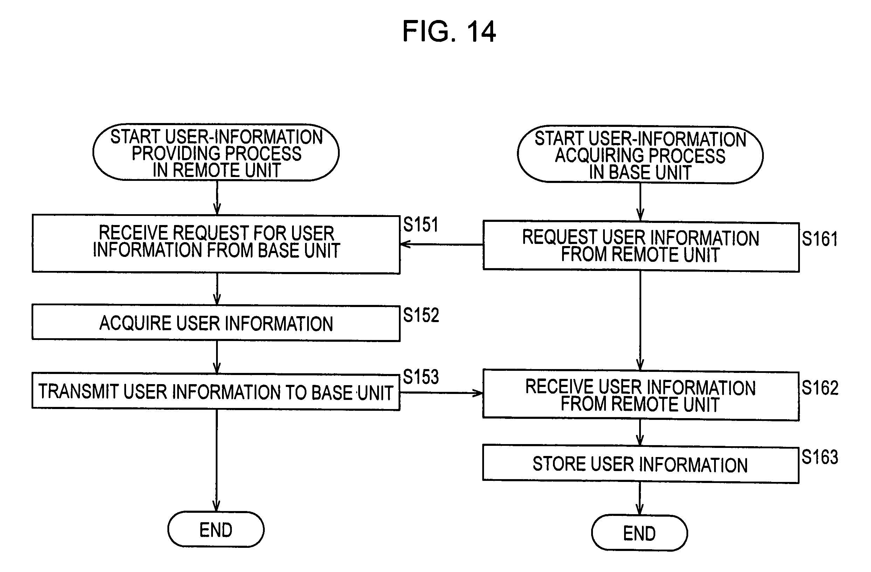

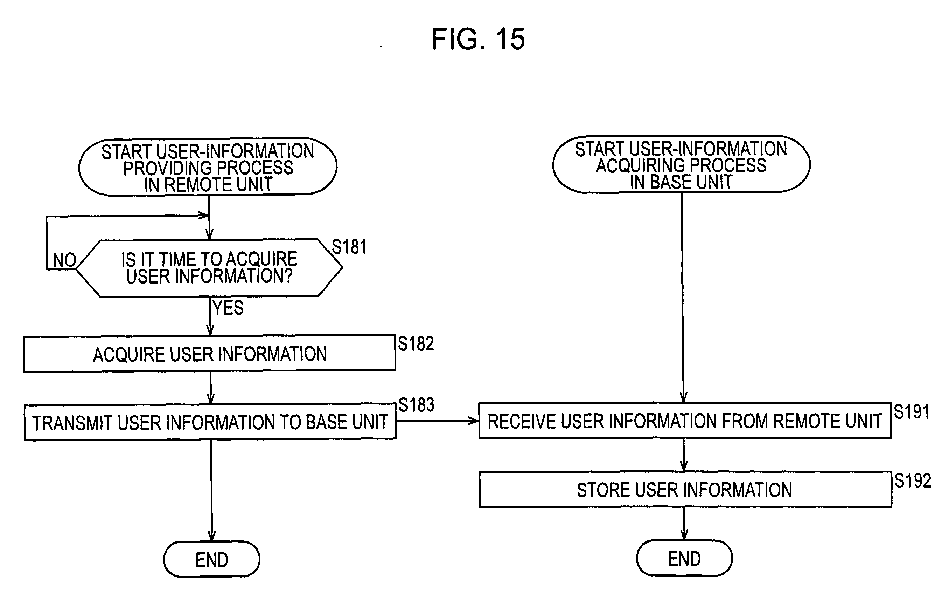

The user information is supplied from the remote unit 3 to the base unit 2 in Step S101, Step S102, and Step S121 in Fig. 13. Specifically, the processing in these steps is performed according to, for example, a flowchart shown in Fig. 14 or Fig. 15.

An example of the process of supplying the user information from the remote unit 3 to the base unit 2 will now be described with reference to the flowchart in Fig. 14. In Step S161, the CPU 201 in the base unit 2 requests the user information from the remote unit 3 through the Bluetooth communication unit 221. The user information requested in Step S161 may be any of, for example, the audio information acquired by the microphone 102, the heart rate of the user calculated by the heartbeat detecting unit 157, the temperature and humidity detected by the temperature-humidity sensor 103, the longitude and latitude measured by the GPS detecting unit 125, the object an image of which is picked up by the imaging unit 121, the three-dimensional attitude angle detected by the triaxial motion sensor 128, and the information detected by the magnetic sensor 127 or may be any combination of the above information. Or, all of the above information may be detected here.

In Step S151, the CPU 151 in the remote unit 3 receives the request for the user information from the base unit 2 through the Bluetooth communication unit 126. In Step S152, the CPU 151 in the remote unit 3 acquires the user information supplied from the sensors including the microphone 102, the heartbeat detecting unit 157, the temperature-humidity sensor 103, the GPS detecting unit 125, the imaging unit 121, the triaxial motion sensor 128, and the magnetic sensor 127. The information acquired by the CPU 151 in Step S152 is the information requested by the base unit 2 in Step S161. In other words, the CPU 151 does not necessarily acquire the information from all of the microphone 102, the heartbeat detecting unit 157, the temperature-humidity sensor 103, the GPS detecting unit 125, the imaging unit 121, the triaxial motion sensor 128, and the magnetic sensor 127 but acquires only the information requested by the base unit 2. For example, when the information concerning the temperature is requested by the base unit 2, the CPU 151 acquires only the information concerning the temperature from the temperature-humidity sensor 103.

In Step S153, the CPU 151 transmits the user information acquired in Step S152 to the base unit 2 through the Bluetooth communication unit 126.

In Step S162, the CPU 201 in the base unit 2 receives the user information transmitted by the remote unit 3 in Step S153 through the Bluetooth communication unit 221. In Step S163, the CPU 201 in the base unit 2 stores the user information received in Step S162 in the HDD 223.

The user information is supplied from the remote unit 3 to the base unit 2 in the manner described above. As described above, the remote unit 3 can acquire the user information requested by the base unit 2 and supply the acquired user information to the base unit 2.

An example, different from the one shown in Fig. 14, of the process of supplying the user information from the remote unit 3 to the base unit 2 will now be described with reference to the flowchart in Fig. 15.

In the example in Fig. 15, the timing of acquisition of the user information is set in advance in the remote unit 3. In Step S181, the CPU 151 in the remote unit 3 determines whether it is time to acquire the user information. The CPU 151 repeats the processing in Step S181 and is on standby until the CPU 151 determines that it is time to acquire the user information.

For example, the remote unit 3 can be set in advance so as to transmit the temperature information to the base unit 2 every minute. With this setting, the CPU 151 in the remote unit 3 determines whether it is time to acquire the user information (temperature information) every minute in Step S181.

If the CPU 151 determines that it is time to acquire the user information in Step S181, the process proceeds to Step S182. In Step S182, the CPU 151 in the remote unit 3 acquires the user information determined to be acquired in Step S181.

Since the processing in Step S183 is the same as that in Step S153 in Fig. 14, a description is omitted here. In addition, since the processing in the base unit 2 in Step S191 and Step S192 is the same as that in Step S162 and Step S163 in Fig. 14, respectively, a description is omitted here.

As described with reference to the flowchart in Fig. 15, the remote unit 3 may automatically acquire the user information at a predetermined timing that is set in advance and supply the user information to the base unit 2.

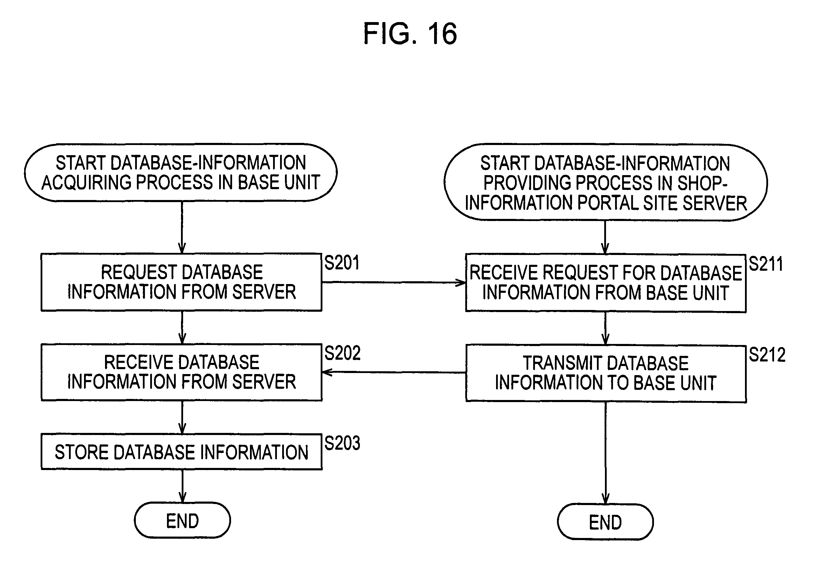

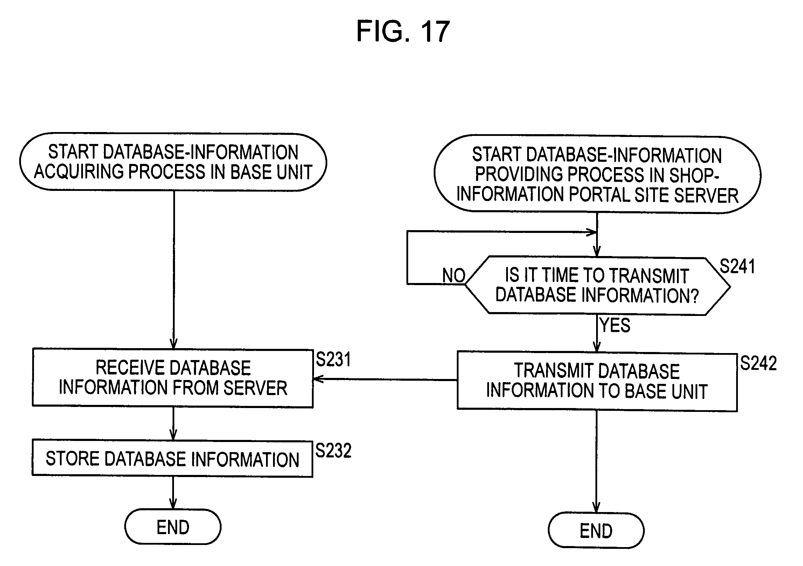

The database information is supplied from the shop-information portal site server 5 to the base unit 2 in Step S131 and Step S122 in Fig. 13. Specifically, the processing in these steps is performed according to, for example, a flowchart shown in Fig. 16 or Fig. 17.

An example of the process of supplying the database information from the shop-information portal site server 5 to the base unit 2 will now be described with reference to the flowchart in Fig. 16. In Step S201, the CPU 201 in the base unit 2 requests the database information from the shop-information portal site server 5 through the wireless LAN communication unit 225. The database information requested in Step S201 is, for example, information concerning the price, size, or color of an article sold in the shop.

In Step S211, the CPU 301 in the shop-information portal site server 5 receives the request for the database information from the base unit 2 through the communication unit 311. In Step S212, the CPU 301 in the shop-information portal site server 5 reads out the database information from the HDD 304 and transmits the readout database information to the base unit 2 through the communication unit 311.

In Step S202, the CPU 201 in the base unit 2 receives the user information transmitted by the shop-information portal site server 5 in Step S212 through the wireless LAN communication unit 225. In Step S203, the CPU 201 in the base unit 2 stores the database information received in Step S202 in the HDD 223.

The database information is supplied from the shop-information portal site server 5 to the base unit 2 in the manner described above. As described above, the shop-information portal site server 5 can supply the database information requested by the base unit 2 to the base unit 2.

An example, different from the one shown in Fig. 16, of the process of supplying the database information from the shop-information portal site server 5 to the base unit 2 will now be described with reference to the flowchart in Fig. 17.

In the example in Fig. 17, the timing of supply of the database information to the base unit 2 is set in advance in the shop-information portal site server 5. In Step S241, the CPU 301 in the shop-information portal site server 5 determines whether it is time to transmit the database information. The CPU 301 repeats the processing in Step S241 and is on standby until the CPU 301 determines that it is time to transmit the database information.

For example, the shop-information portal site server 5 can be set in advance so as to transmit the information concerning daily bargains to the base unit 2 every day. With this setting, the CPU 301 in the shop-information portal site server 5 determines whether it is time to acquire the database information every day in Step S241.

If the CPU 301 determines that it is time to acquire the database information in Step S241, the process proceeds to Step S242. In Step S242, the CPU 301 in the shop-information portal site server 5 reads out the database information from the HDD 304 and transmits the readout database information to the base unit 2 through the communication unit 311.

Since the processing in the base unit 2 in Step S231 and Step S232 is the same as that in Step S202 and Step S203 in Fig. 16, respectively, a description is omitted here.

As described with reference to the flowchart in Fig. 17, the shop-information portal site server 5 may automatically transmit the database information to the base unit 2 at a predetermined timing that is set in advance.

In Step S123, the base unit 2 selects information anticipated being useful to the user based on the user information and the database information acquired in the manner described above. In Step S124, the base unit 2 requests the remote unit 3 to recommend the information selected in Step S123.

Conventionally, the processing performed by the base unit 2 in Step S123 has been performed by a server provided on the network 1. In such a case, it is necessary to transmit the private information of the user to the server over the network 1. In contrast, storing and managing the user information in the base unit 2 owned by the user, as in the service providing system of the present invention, prevents the user information from being transmitted to the server on the network 1, thus reducing the possibility of leakage of the private information of the user.

Examples in which the service providing system of the present invention is applied to specific situations will be described below.

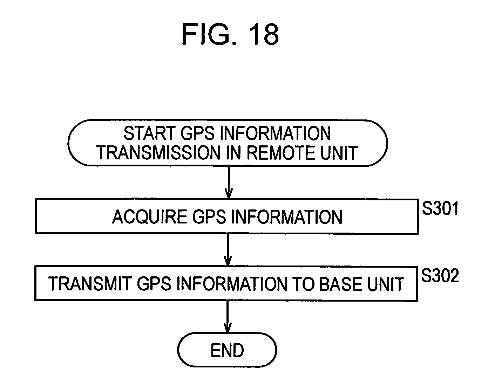

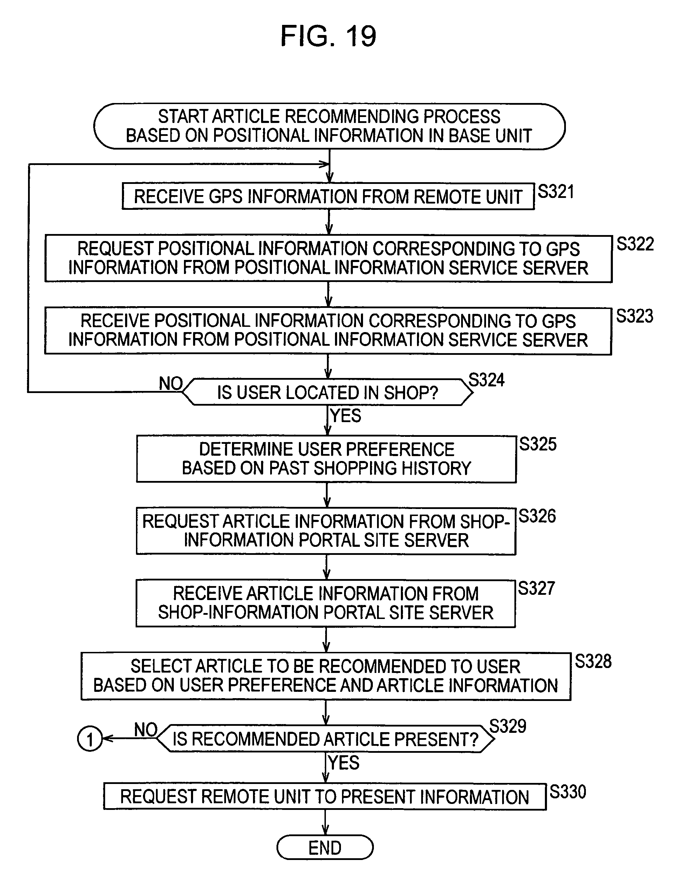

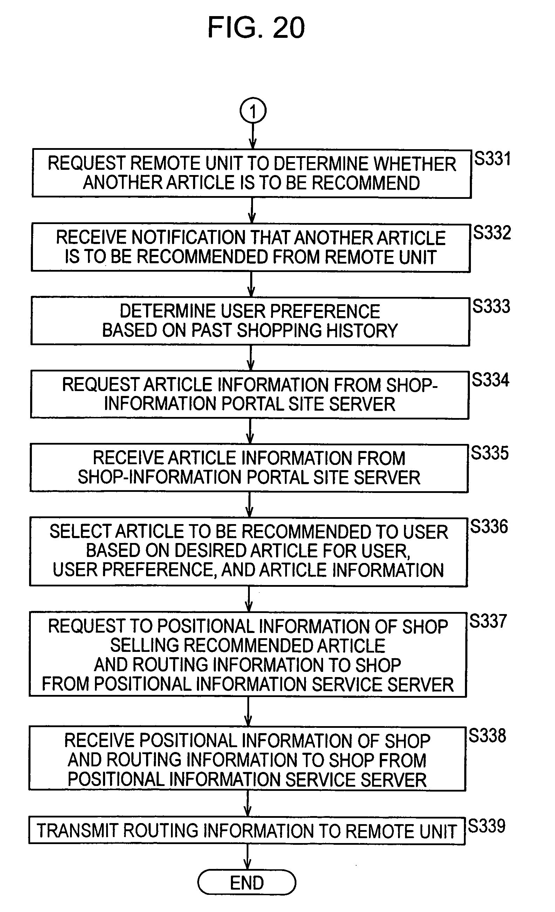

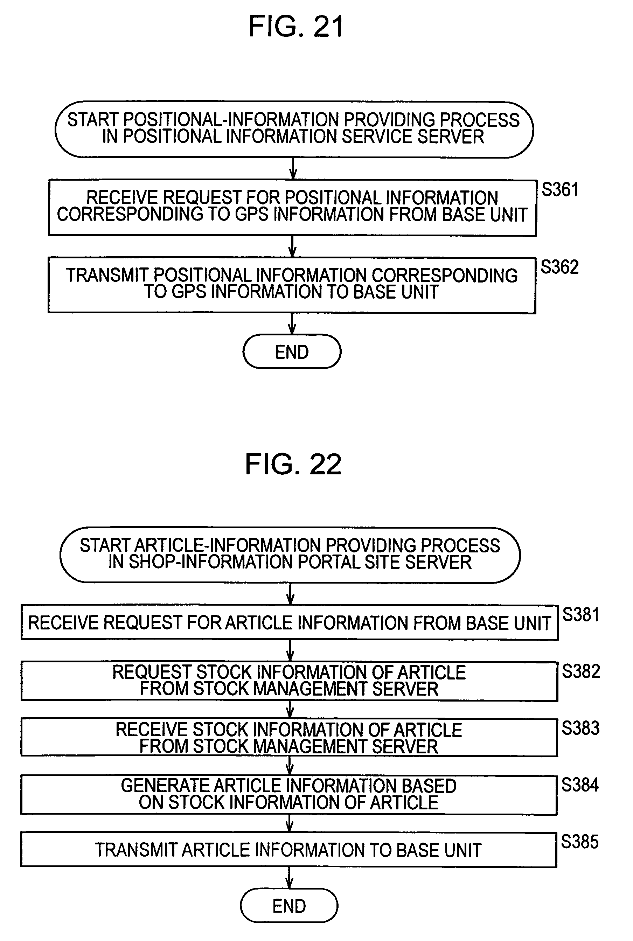

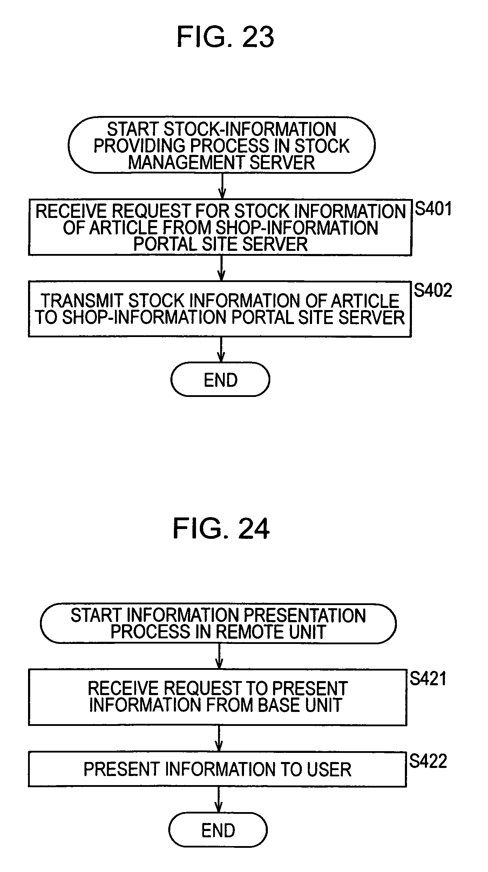

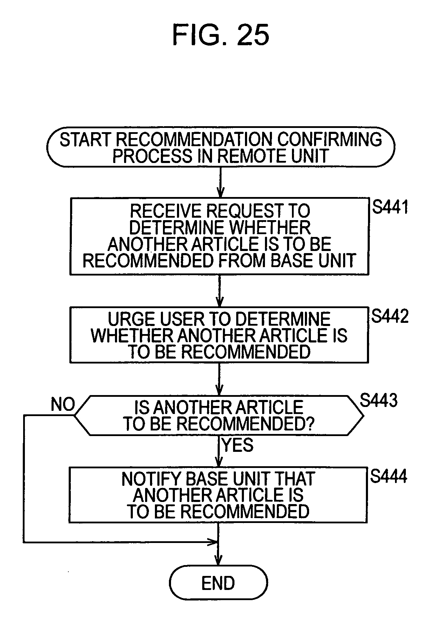

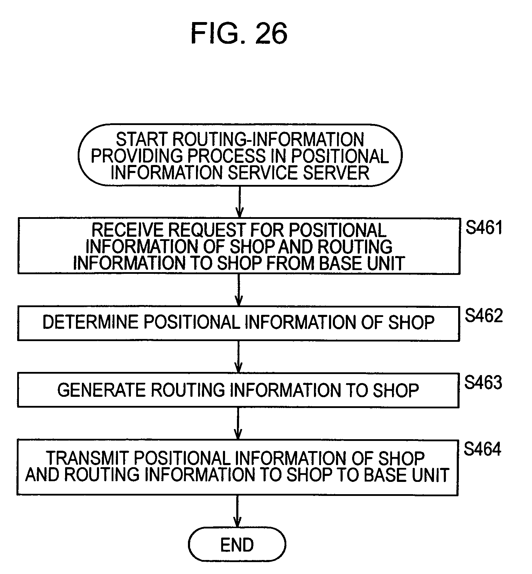

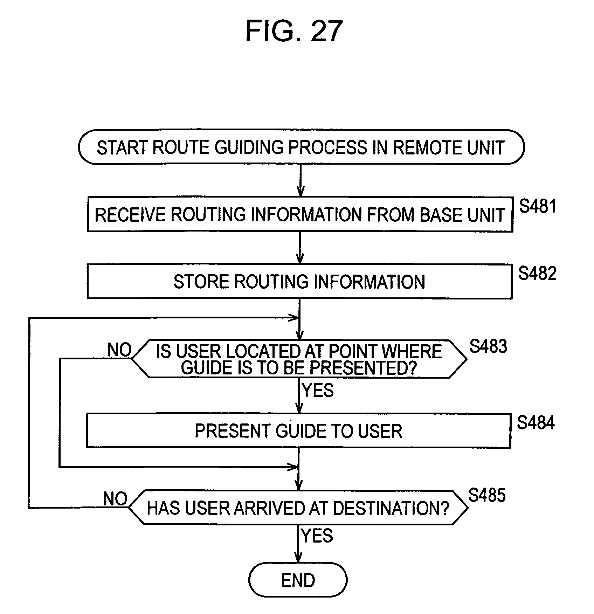

First, a process of recommending an article to the user based on positional information will now be described with reference to the flowcharts in Figs. 18 to 27. Fig. 18 shows a process of transmitting GPS information in the remote unit 3. Figs. 19 and 20 show a process of recommending an article based on the positional information in the base unit 2. Fig. 21 shows a process of providing the positional information in the positional information service server 7. Fig. 22 shows a process of providing article information in the shop-information portal site server 5. Fig. 23 shows a process of providing stock information in the stock management server 6. Fig. 24 shows a process of presenting information in the remote unit 3. Fig. 25 shows a process of confirming recommendation in the remote unit 3. Fig. 26 shows a process of providing routing information in the positional information service server 7. Fig. 27 shows a route guiding process in the remote unit 3.

For example, the remote unit 3 is set in advance so as to acquire the GPS information for every ten minutes. When it is time to acquire the GPS information, the remote unit 3 performs the process of transmitting the GPS information shown in Fig. 18. Referring to Fig. 18, in Step 301, the CPU 151 in the remote unit 3 acquires the GPS information through the GPS detecting unit 125. In Step S302, the CPU 151 in the remote unit 3 transmits the GPS information to the base unit 2 through the Bluetooth communication unit 126.

The base unit 2 starts the process of recommending an article based on the positional information, shown in Fig. 19. Referring to Fig. 19, in Step S321, the CPU 201 in the base unit 2 receives the GPS information transmitted by the remote unit 3 in Step S302 through the Bluetooth communication unit 221 and stores the received GPS information in the HDD 223. In Step S322, the CPU 201 in the base unit 2 transmits the GPS information to the positional information service server 7 through the wireless LAN communication unit 225 and requests information concerning a building, a shop, a facility, or the like, located at the location corresponding to the GPS information (the longitude and latitude) (the information concerning a building, a shop, a facility, or the like, located at the location corresponding to the GPS information, is hereinafter also referred to as the positional information).

The positional information service server 7 performs the process of providing the positional information, shown in Fig. 21. Referring to Fig. 21, in Step S361, the CPU 401 in the positional information service server 7 receives the request for transmission of the GPS information and the positional information, transmitted by the base unit 2 in Step S322. In Step S362, the CPU 401 in the positional information service server 7 reads out the positional information corresponding to the GPS information received in Step S361 from the HDD 404 and transmits the read out positional information to the base unit 2 through the communication unit 411.

Referring back to Fig. 19, in Step S323, the CPU 201 in the base unit 2 receives the positional information transmitted by the positional information service server 7 in Step S362 through the wireless LAN communication unit 225. In Step S324, the CPU 201 in the base unit 2 determines whether the user is located in the shop based on the positional information. If the user is not located in the shop, the process goes back to Step S321 and repeats the steps subsequent to Step S321.

If the CPU 201 determines in Step S324 that the user is located in the shop, the process proceeds to Step S325. Although the base unit 2 determines only whether the user is located at the shop at the present moment in Step S324 in the above description, the base unit 2 may determine that the user is located in the shop, for example, when the user is located in the same shop for a time period longer than a predetermined time period that is set in advance and, then, the process may proceed to Step S325.

In other words, the base unit 2 periodically may acquire the GPS information from the remote unit 3 and may determine whether the user is located in the same shop for a predetermined time period based on the GPS information. If the user is located in the same shop for a time period longer than the predetermined time period that is set in advance, the base unit 2 determines that the user is located in the shop and the process proceeds to Step S325.

Although the case in which the user is located in the shop is described above, the base unit 2 may determine whether the user is located near the shop.

The HDD 223 in the base unit 2 stores the history of articles which the user has purchased (the history of the articles which the user has purchased is hereinafter referred to as shopping history). In Step S325, the CPU 201 in the base unit 2 determines a preference of the user based on the shopping history. The determination is performed based on an existing data mining method. For example, a manufacturer or brand of cosmetics which the user frequently purchases or a color according to user preference is determined in Step S325.

In Step S326, the CPU 201 in the base unit 2 requests information concerning the articles sold in the shop where the user is currently located (the information concerning the articles sold in a shop is hereinafter referred to as article information) from the shop-information portal site server 5 through the wireless LAN communication unit 225.

The shop-information portal site server 5 starts the process of providing the information concerning the article shown in Fig. 22. Referring to Fig. 22, in Step S381, the CPU 301 in the shop-information portal site server 5 receives the request for the article information transmitted by the CPU 201 in the base unit 2 in Step S326 through the communication unit 311. In Step S382, the CPU 301 in the shop-information portal site server 5 requests information on whether the article currently sold in the shop where the user is located is in stock (the information on whether the article currently sold is in stock is hereinafter referred to as stock information) from the stock management server 6 through the communication unit 311.

The stock management server 6 performs the process of providing the stock information shown in Fig. 23. Referring to Fig. 23, in Step S401, the CPU 351 in the stock management server 6 receives the request for the stock information transmitted by the shop-information portal site server 5 in Step S382 through the communication unit 361. At this time, the stock management server 6 stores the stock information of the article currently sold in the shop where the user is located in the HDD 354. In Step S402, the CPU 351 in the stock management server 6 reads out the stock information from the HDD 354 and transmits the readout stock information to the shop-information portal site server 5 through the communication unit 361.

Referring to back to Fig. 22, in Step S383, the CPU 301 in the shop-information portal site server 5 receives the stock information transmitted by the stock management server 6 in Step S402 through the communication unit 311. In Step S384, the CPU 301 in the shop-information portal site server 5 generates article information to be supplied to the base unit 2 based on the stock information received in Step S383. In Step S385, the CPU 301 in the shop-information portal site server 5 transmits the article information generated in Step S384 to the base unit 2 through the communication unit 311.

Referring back to Fig. 19, in Step S327, the CPU 201 in the base unit 2 receives the article information transmitted by the shop-information portal site server 5 in Step S385 through the wireless LAN communication unit 225 and stores the received article information in the HDD 223. In Step S328, the CPU 201 in the base unit 2 selects an article to be recommended to the user based on the user preference determined in Step S325 and the article information received in Step S327. In other words, the CPU 201 selects an article suited to the user preference from the list of articles that are included in the article information and that are sold in the shop where the user is located. The CPU 201 selects an article suited to the user preference based on, for example, whether a predetermined keyword (such as a user's favorite brand name) is associated with the article.

There is possibly no article suited to the user preference in Step S328. Accordingly, in Step S329, the CPU 201 determines whether the article to be recommended to the user is present in the processing in Step S328. If the article to be recommended to the user is present, the process proceeds to Step S330.

In Step S330, the CPU 201 in the base unit 2 transmits the information concerning the article (for example, the information concerning the price or characteristics of the article) selected in Step S328 to the remote unit 3 through the Bluetooth communication unit 221 and requests the remote unit 3 to recommend the article.

The remote unit 3 performs the process of presenting the information shown in Fig. 24. In Step S421, the CPU 151 in the remote unit 3 receives, through the Bluetooth communication unit 126, the information concerning the article and the request to recommend the article, transmitted by the base unit 2 in Step S330, and stores the received information and request in the RAM 153. In Step S422, the CPU 151 in the remote unit 3 presents the information concerning the article, received in Step S421. Specifically, for example, the CPU 151 vibrates the vibrators 124-1 and 124-2 and turns on the LED 159 or causes the LED 159 to blink. The CPU 151 then displays the information concerning the article (for example, an image, characteristics, and the price of the article) in the display 101. The CPU 151 also causes the speaker 105 through the audio output controller 158 to output a sound for guiding the article.

The user carrying the remote unit 3 in his/her hand takes notice of the remote unit 3 owing to the vibration of the vibrators 124-1 and 124-2. The user can browse the guide to the article suited to the user preference. The guide to the article includes a message displayed in the display 101 and an audio guide output from the speaker 105. The article recommended here is the article currently sold in the shop where the user is located.

Referring back to Fig. 19, if the CPU 201 in the base unit 2 determines in Step S329 that the article to be recommended to the user is not present in the processing in Step S328, the process proceeds to Step S331 in Fig. 20. In Step S331, the CPU 201 in the base unit 2 requests the remote unit 3, through the Bluetooth communication unit 221, to determine whether another article is to be recommended.

The remote unit 3 performs the process of confirming the recommendation shown in Fig. 25. In Step S441, the CPU 151 in the remote unit 3 receives the request to determine whether another article is to be recommended, transmitted by the base unit 2 in Step S331. In Step S442, the CPU 151 in remote unit 3 urges the user to determine whether another article is to be recommended. Specifically, the CPU 151 vibrates the vibrators 124-1 and 124-2 and turns on the LED 159 or causes the LED 159 to blink in order to call the user's attention to the remote unit 3. The CPU 151 then displays in the display 101 a message, such as "the shop has recommended clothes but it is out of stock. Would you like to look for clothes suiting you well?".

A keyword used when another article is to be recommended ("look for" in the description below) and a keyword used when another article is not to be recommended ("stop" in the description below) are registered in the remote unit 3 in advance. When the user wants the recommendation of another article, the user speaks to the remote unit 3 the keyword "look for" used when another article is to be recommended. When the user does not want the recommendation of another article, the user speaks to the remote unit 3 the keyword "stop" used when another article is not to be recommended. The word the user speaks is collected by the microphone 102. The CPU 151 activates an audio recognition program to recognize the sound collected by the microphone 102. In Step S443, the CPU 151 in the remote unit 3 determines whether the word the user speaks coincides with the keyword "look for" as a result of the audio recognition. If the word the user speaks coincides with the keyword "look for", the process proceeds to Step S444.

In Step S444, the CPU 151 in the remote unit 3 notifies the base unit 2 through the Bluetooth communication unit 126 that another article is to be recommended.

If the CPU 151 in the remote unit 3 determines in Step S443 that the word the user speaks does not coincide with the keyword "look for", that is, if the CPU 151 determines that the word the user speaks is the keyword "stop" used when another article is not to be recommended or that the word the user speaks does not coincide with the keyword "look for" nor "stop", the processing in Step S444 is skipped and the process of confirming the recommendation is finished. In this case, no information is transmitted to the base unit 2. The base unit 2 sets a timer for a predetermined time (for example, one minute) immediately after the base unit 2 requests the remote unit 3 to determine whether another article is to be recommended in Step S331. If no reply is transmitted from the remote unit 3 before the predetermined time the timer is set for elapsed, the base unit 2 determines that the remote unit 3 does not recommend another article and the process is finished.

With the timer set in this manner, even when the user does not aware of the urgency in Step S442, the base unit 2 need not continue to wait for the reply from the remote unit 3.

Referring back to Fig. 20, in Step S332, the CPU 201 in the base unit 2 receives the notification that another article is to be recommended, transmitted by the remote unit 3 in Step S444, through the Bluetooth communication unit 221. In Step S333, the CPU 201 in the base unit 2 determines a preference of the user based on the past shopping history stored in the HDD 223.

In Step S334, the CPU 201 in the base unit 2 requests the article information of the articles sold in another shop near the location of the user from the shop-information portal site server 5 through the wireless LAN communication unit 225.

The shop-information portal site server 5 performs the process of providing the article information shown in Fig. 22. Since the process of providing the article information in Fig. 22 is performed in the manner described above, the process is briefly described here. In Step S381, the CPU 301 in the shop-information portal site server 5 receives the request for the article information, transmitted by the CPU 201 in the base unit 2 in Step S334, through the communication unit 311. In Step S382, the CPU 301 in the shop-information portal site server 5 requests the stock information of the articles currently sold in the shop near the location of the user from the stock management server 6 through the communication unit 311.

The stock management server 6 performs the process of providing the stock information shown in Fig. 23. The process of providing the stock information in Fig. 23 is performed as described above. That is, in Step S401, the CPU 351 in the stock management server 6 receives the request for the stock information, transmitted by the shop-information portal site server 5 in Step S382, through the communication unit 361. In Step S402, the CPU 351 in the stock management server 6 reads out the stock information from the HDD 354 and transmits the readout stock information to the shop-information portal site server 5 through the communication unit 361. The stock information transmitted here is the stock information of the shop near the location of the user.

Referring back to Fig. 22, in Step S383, the CPU 301 in the shop-information portal site server 5 receives the stock information transmitted by the stock management server 6 in Step S402 through the communication unit 311. In Step S384, the CPU 301 in the shop-information portal site server 5 generates article information to be supplied to the base unit 2 based on the stock information. In Step S385, the CPU 301 in the shop-information portal site server 5 transmits the article information generated in Step S384 to the base unit 2 through the communication unit 311.

Referring back to Fig. 20, in Step S335, the CPU 201 in the base unit 2 receives the article information, transmitted by the shop-information portal site server 5 in Step S385, through the wireless LAN communication unit 225 and stores the received article information in the HDD 223. In Step S336, the CPU 201 in the base unit 2 selects an article to be recommended to the user based on the list, set in advance by the user, of the articles which the user wants to purchase, the user preference determined in Step S333, and the article information received in Step S335. In this selection (data mining), the CPU 201 in the base unit 2 selects, for example, the article that was recommended in a past similar situation or the article purchased by a person having a taste similar to that of the user, based on the past information detected by the sensors, data concerning the tendency in purchased articles, determined from the information concerning online shopping (online payment), and the information detected by the sensors when the service providing system is used for other purposes.

In Step S337, the CPU 201 in the base unit 2 requests the positional information of the shop where the article selected in Stet S336 is sold and routing information representing the route to the shop from the positional information service server 7 through the wireless LAN communication unit 225.

The positional information service server 7 performs the process of providing the routing information shown in Fig. 26. In Step S461, the CPU 401 in the positional information service server 7 receives the request for the positional information of the shop where the article is sold and the routing information representing the route to the shop, transmitted by the base unit 2 in Step S337, through the communication unit 411.

The HDD 404 in the positional information service server 7 stores multiple shops that are located in a predetermined area and the positional information associated with the multiple shops. In Step S462, the CPU 401 in the positional information service server 7 reads out the positional information of the shop where the article is sold from the HDD 404 in response to the request received in Step S461. In Step S463, the CPU 401 in the positional information service server 7 generates routing information for guiding the user to the shop based on the current position of the user and the positional information of the shop determined in Step S462.

In Step S464, the CPU 401 in the positional information service server 7 transmits the positional information determined in Step S462 and the routing information generated in Step S463 to the base unit 2 through the communication unit 411.

Referring back to Fig. 20, in Step S338, the CPU 201 in the base unit 2 receives the positional information and the routing information, transmitted by the positional information service server 7 in Step S464, through the wireless LAN communication unit 225 and stores the received positional information and routing information in the HDD 223. In Step S339, the CPU 201 in the base unit 2 transmits the positional information and the routing information, received in Step S338, to the remote unit 3 through the Bluetooth communication unit 221.

The remote unit 3 performs the route guiding process shown in Fig. 27. In Step S481, the CPU 151 in the remote unit 3 receives the positional information and the routing information, transmitted by the base unit 2 in Step S339, through the Bluetooth communication unit 126. In Step S482, the CPU 151 in the remote unit 3 stores the received positional information and routing information in the storage unit 154. The routing information includes the position (longitude and latitude) of a corner, which serves as a landmark for guiding the user to the shop. When the user reaches a corner, the CPU 151 uses the vibrators 124-1 and 124-2 or the like to present the destination based on the GPS information from the GPS detecting unit 125.

In Step S483, the CPU 151 in the remote unit 3 determines whether the user is located at a point where a guide is to be presented based on the routing information and the GPS information from the GPS detecting unit 125. The CPU 151 in the remote unit 3 repeats the processing in Step S483 until the CPU 151 determines that the user is located at a point where the guide is to be presented and is on standby. Since it is necessary to present the destination (direction of travel) to the user immediately after the CPU 151 stores the routing information in Step S482, the CPU 151 determines, in Step S483, whether the user is located at a point where the guide is to be presented immediately after the processing in Step S482, and the process proceeds to Step S484.

In Step S484, the CPU 151 in the remote unit 3 reads out a guide to be presented corresponding to the longitude and latitude in the GPS information from the routing information and presents the readout guide to the user. In other words, the routing information is information in which the longitude and latitude of a corner is associated with the direction of travel (right-hand turn or left-hand turn) of the user. When the user reaches a corner, the CPU 151 vibrates the vibrators 124-1 and 124-2 and turns on the LED 159 or causes the LED 159 to blink to attract the user's attention to the remote unit 3. The CPU 151 then displays a message (for example, a message "turn right") in the display 101 or causes the speaker 105 through the audio output controller 158 to output an audio guide "turn right" to present the destination to the user.

In Step S485, the CPU 151 in the remote unit 3 determines whether the user reaches the target shop (the shop where the recommended article is sold) based on the GPS information and the positional information. If the user does not reach the target shop, the process goes back to Step S483 to repeat the steps subsequent to Step S483.

Repeating the steps from Step S483 to Step S485 ensures that the guide is presented to the user at the point where the user should turn. If the user reaches the target shop, the CPU 151 in the remote unit 3 determines in Step S485 that the user reaches the target shop, and the route guiding process is finished.

The article suited to the user preference can be presented to the user in the manner described above. Since the information concerning the shopping history or preference of the user is held and managed by the base unit 2, it is possible to reduce leakage of the private information of the user. Accordingly, compared with a case in which the private information including the shopping history or preference of the user is managed by a server on the network, the safety on the network can be improved.

Although the location of the user is determined based on the GPS information acquired by the GPS antenna 123 and the GPS detecting unit 125 of the remote unit 3 in the above description, the location of the user may be determined by other means, instead of the GPS information. For example, the location of the user may be determined by picking up an image of the logo or look of the shop by the imaging unit 121 in the remote unit 3 and analyzing the image. A detailed location of the user may be determined by using the rough location of the user determined based on the GPS information and the image picked up by the imaging unit 121.

Alternatively, the remote unit 3 may receive the ID identifying a shop to recognize the shop. In this case, the ID is transmitted by a low-speed communication module, such as an RF communication module, provided in the shop. In the case of a shop having an access point of a wireless LAN installed therein and providing a connection service (a so-called hotspot service) to the Internet, the ID identifying the shop may be transmitted from the access point of the wireless LAN to the remote unit 3. Or, a shop may be determined by picking up an image of a barcode tag, such as a CyberCode (trademark), provided in the shop by the imaging unit 121, analyzing the image, and recognizing the ID.

Furthermore, the location (station) of the user may be determined in conjunction with a super urban intelligent card (Suica), which is a non-contact type IC card.

When an article to be recommended to the user is clothes, images of clothes possessed by the user may be picked up by the imaging unit 121 and the preference of the user may be analyzed based on the images to select the article to be recommended to the user.

Although the vibration or turning on (blinking) of the remote unit 3 is used to guide the user to the shop (the route guiding process in Fig. 27) in the above description, a map may be displayed in the display 101, as in a car navigation system, to guide the user to the shop.

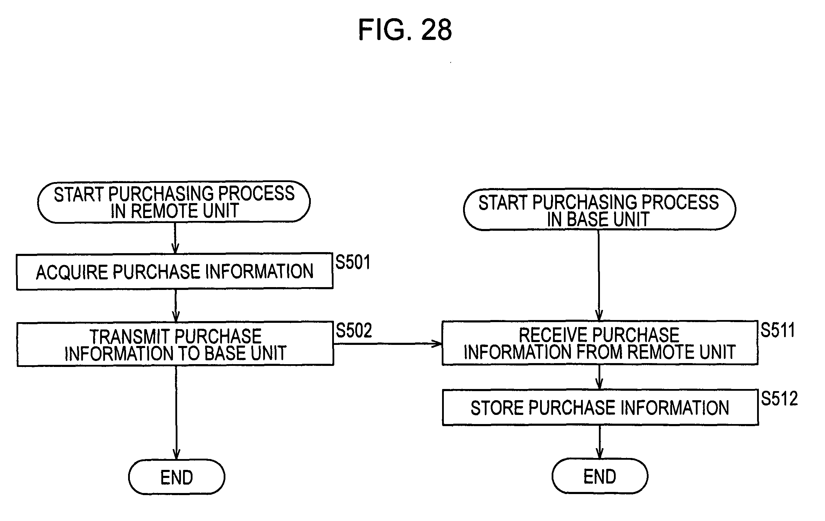

Next, a process of purchasing an article by the user will now be described with reference to the flowchart in Fig. 28. Since the remote unit 3 is provided with the IC communication unit 104, the remote unit 3 has a function as electronic money. When the user pays for an article in the shop through the IC communication unit 104, in Step S501, the CPU 151 in the remote unit 3 stores the article information, including the name and price of the purchased article, and the purchase information, including the purchase date and time, in the storage unit 154. In step S502, the CPU 151 in the remote unit 3 transmits the purchase information stored in the storage unit 154 in Step S501 to the base unit 2 through the Bluetooth communication unit 126.

In Step S511, the CPU 151 in the base unit 2 receives the purchase information transmitted by the remote unit 3 in Step S502 through the Bluetooth communication unit 221. In Step S512, the CPU 151 in the base unit 2 stores the purchase information received in Step S511 in the HDD 223.

The purchase information of the article purchased by the user is stored in the HDD 223 in the base unit 2 in the manner described above. The purchase information accumulated in the HDD 223 in this manner is used as shopping history information (the processing in Step S325 in Fig. 19 and the processing in Step S333 in Fig. 20).

Although the purchase information of the user can be acquired in the above description when the article is purchased through the IC communication unit 104, the purchase information cannot be acquired when the article is not purchased through the IC communication unit 104. Accordingly, in order to identify the article purchased by the user, the history of the articles purchased by the user may be acquired from, for example, a card company with which the user is affiliated in advance. Or, the article purchased by the user may be identified by reading the barcode or the like on the article. When the user inputs the information concerning a housekeeping book in the base unit 2, the information concerning the housekeeping book, input in the base unit 2, may be used to identify the article purchased by the user.

Although an article is recommended based on the position (GPS information) where the user is located in the above description, an article may be recommended to the user based on information other than the positional information according to the present invention.

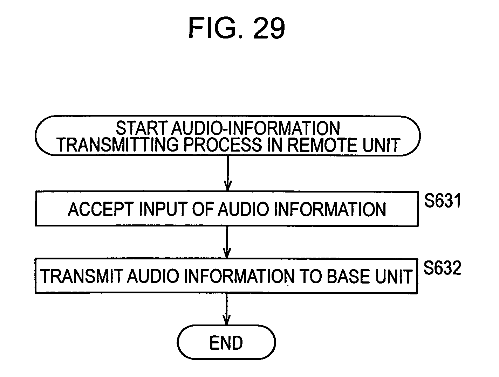

Next, a case in which an article is recommended to the user based on audio information will now be described with reference to the flowcharts in Figs. 29 to 32.

When the user speaks to the remote unit 3 about an article the user wants to buy, for example, when the user speaks a message "I want to buy a jacket matched with the pants I previously bought", in Step S591 in Fig. 29, the microphone 102 in the remote unit 3 collects the sound. In step S592, the CPU 151 in the remote unit 3 transmits the audio information collected in Step S591 to the base unit 2 through the Bluetooth communication unit 126.

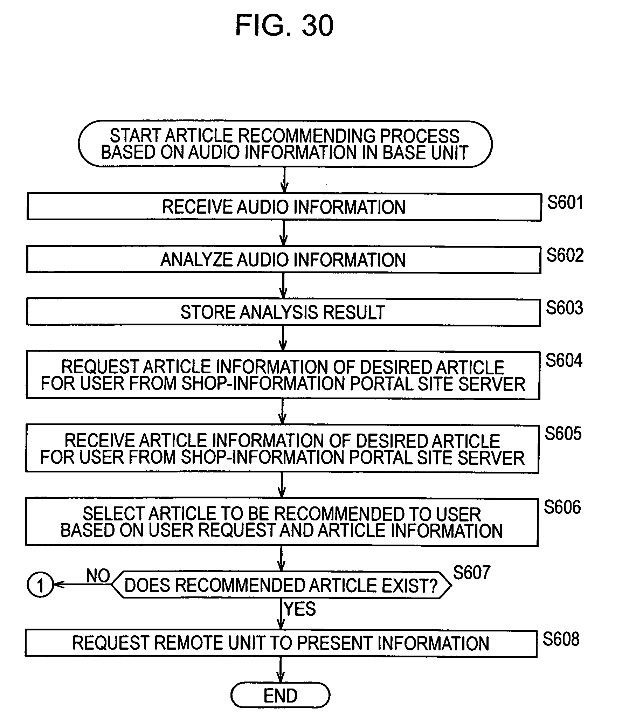

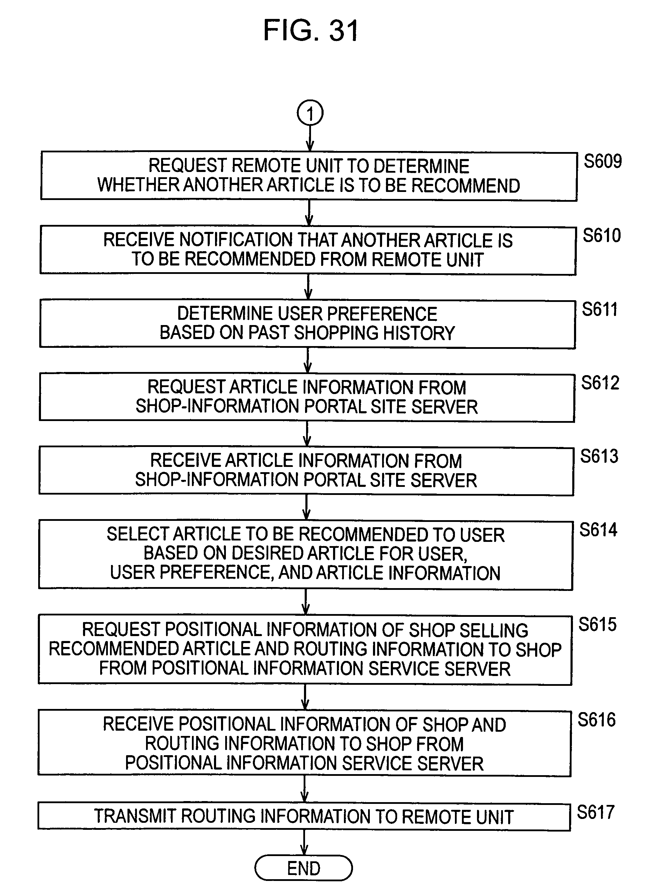

The base unit 2 starts a process of recommending an article based on the audio information, shown in Figs. 30 and 31. In Step S601, the CPU 201 in the base unit 2 receives the audio information transmitted by the remote unit 3 in Stet S592 and stores the received audio information in the RAM 209. In Step S602, the CPU 201 in the base unit 2 activates an audio recognition program to analyze the audio information stored in the RAM 209 in Step S601. In Step S603, the CPU 201 in the base unit 2 stores the analysis result in Step S602 as an article the user wants to buy.

In Step S604, the CPU 201 in the base unit 2 requests the article information of the article the user wants to buy from the shop-information portal site server 5 through the wireless LAN communication unit 225. For example, when the user wants to buy a jacket, as described above, the CPU 201 in the base unit 2 requests the article information of jackets sold in the shop from the shop-information portal site server 5.

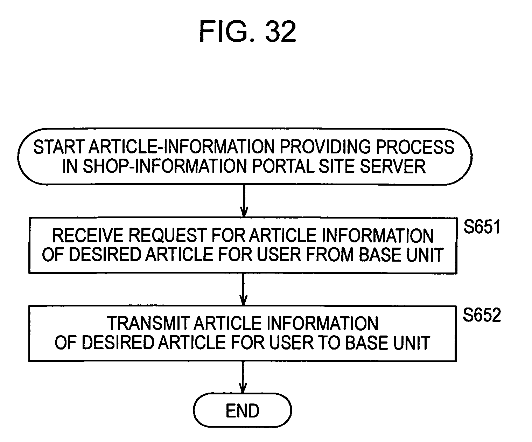

The shop-information portal site server 5 performs a process of providing the article information shown in Fig. 32. In Step S651, the CPU 301 in the shop-information portal site server 5 receives the request for the article information, transmitted by the base unit 2 in Step S604, through the communication unit 311. In Step S652, the CPU 301 in the shop-information portal site server 5 reads out only the article information of the article the user wants to buy (for example, the article information of the jackets) from among the article information stored in the HDD 304 and transmits the readout article information to the base unit 2 through the communication unit 311.

Referring back to Fig. 30, in Step S605, the CPU 201 in the base unit 2 receives the article information transmitted by the shop-information portal site server 5 in Step S652 through the wireless LAN communication unit 225. In Step S606, the CPU 201 in the base unit 2 selects an article to be recommended to the user based on the result of the audio analysis in Step S602 and the article information received in Step S605. For example, when the user wants to buy a jacket matched with the pants the user previously bought, as described above, the CPU 201 identifies the color of the pants the user previously bought based on the shopping history and selects a jacket having a color matched with the color of the pants based on the article information. In order to realize such selection, a table for coordinating colors is stored in advance in the HDD 223.

There is possibly no article the user can select in Step S606. Accordingly, in Step S607, the CPU 201 in the base unit 2 determines whether the article recommended in Step S606 is selected. If the recommended article is selected, the process proceeds to Step S608.

In Step S608, the CPU 201 in the base unit 2 transmits the information (for example, the information including the price and the characteristics of the article) concerning the article selected in Step S606 to the remote unit 3 through the Bluetooth communication unit 221 and requests the remote unit 3 to recommend the article.

The remote unit 3 performs the process of presenting the information shown in Fig. 24. Since the process in Fig. 24 is described above, the process is briefly described. In Step S421, the CPU 151 in the remote unit 3 receives the information concerning the article and the request to recommend the article, transmitted by the base unit 2 in Step S608, through the Bluetooth communication unit 126 and stores the received information and request in the RAM 153. In Step S422, the CPU 151 in the remote unit 3 presents the information concerning the article, received in Step S421. A specific method of presenting the information is described above.

Referring back to Fig. 30, if the CPU 201 in the base unit 2 determines in Step S607 that the article to be recommended to the user is not present in Step S606, the process proceeds to Step S609. Since the steps from Step 609 to Step 617 are the same as the steps from Step 331 to S339 in Fig. 20, the description is omitted here.

An article can be recommended to the user based on the audio information in the manner described above. Although the article is recommended to the user based on the audio information in the above description, this does not mean that the present invention is limited to the recommendation of the article based on the audio information.

For example, as in a usual personal computer, the user may operate a keyboard or the like to input the request. The user may select a desired item from a list of menus (for example, "search", "direction", and "I want to read mails"), which are set in advance and which are displayed in the base unit 2 or the remote unit 3. The preference of the user may be analyzed based on the number of times the user browses Web pages. Alternatively, the history of the GPS information may be stored in the HDD 223 in the base unit 2 and the preference of the user may be analyzed based on the place (town or shop) the user frequently visits.

The service providing system of the present invention can present the information concerning an area where the user is located to the user. Specifically, for example, when the user gets on a train and gets off the train at a certain station, the service providing system of the present invention can present the information concerning events or bargain sales of articles around the station (in the town) to the user.

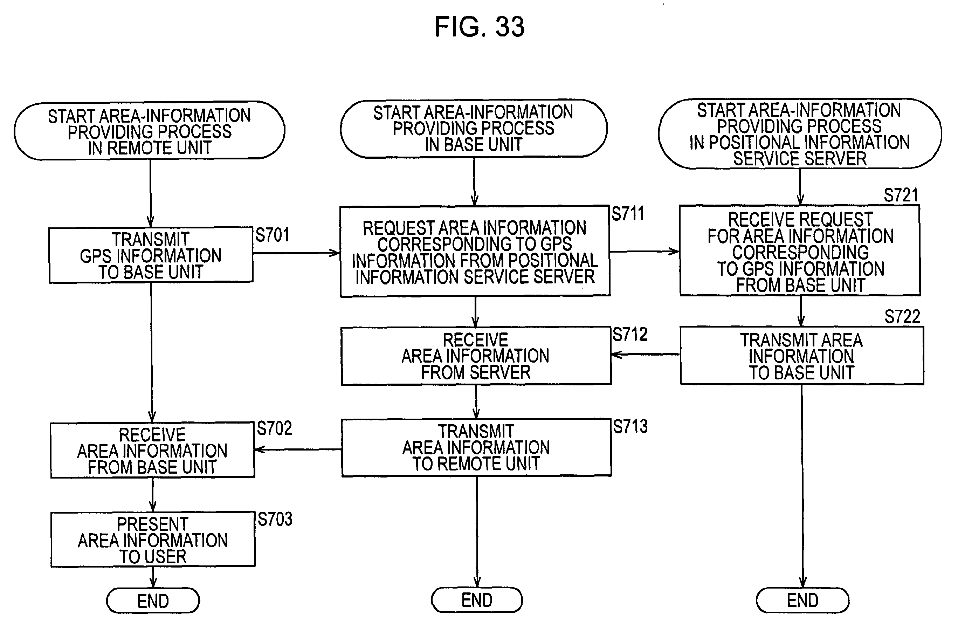

Next, a process of presenting the information concerning an area where the user is located to the user, that is, the area-information providing process will now be described with reference to the flowchart in Fig. 33. In Step S701, the CPU 151 in the remote unit 3 acquires the GPS information through the GPS detecting unit 125 and transmits the acquired information to the base unit 2 through the Bluetooth communication unit 126.

When the CPU 201 in the base unit 2 receives the GPS information transmitted by the remote unit 3 in Step S701 through the Bluetooth communication unit 221, in Step S711, the CPU 201 in the base unit 2 transmits the GPS information to the positional information service server 7 through the wireless LAN communication unit 225 and requests the information concerning the area corresponding to the GPS information (longitude and latitude) (the information concerning an area is hereinafter referred to as area information).

In Step S721, the positional information service server 7 receives the GPS information and the request for the area information corresponding to the GPS information, transmitted by the base unit 2 in Step S711, through the communication unit 411. The positional information service server 7 associates the longitude and latitude with the area information and stores the associated information in the HDD 404. In Stet S722, the CPU 401 in the positional information service server 7 reads out the area information corresponding to the GPS information, received in Step S721, from the HDD 404 and transmits the readout area information to the base unit 2 through the communication unit 411.

In Step S712, the CPU 201 in the base unit 2 receives the area information transmitted by the positional information service server 7 in Step S722 through the wireless LAN communication unit 225. In Step S713, the CPU 201 in the base unit 2 transmits the received area information to the remote unit 3 through the Bluetooth communication unit 221.

In Step S702, the CPU 151 in the remote unit 3 receives the area information transmitted by the base unit 2 in Step S713 through the Bluetooth communication unit 126. In Step S703, the CPU 151 in the remote unit 3 presents the area information to the user. Specifically, for example, the CPU 151 in the remote unit 3 vibrates the vibrators 124-1 and 124-2 and turns on the LED 159 or causes the LED 159 to blink to attract the user's attention to the remote unit 3. The CPU 151 in the remote unit 3 then displays the area information in the display 101 or causes the speaker 105 through the audio output controller 158 to output a guide to the area information.

The user can acquire the useful information concerning an area where the user visits for the first time owing to the guide to the area information.

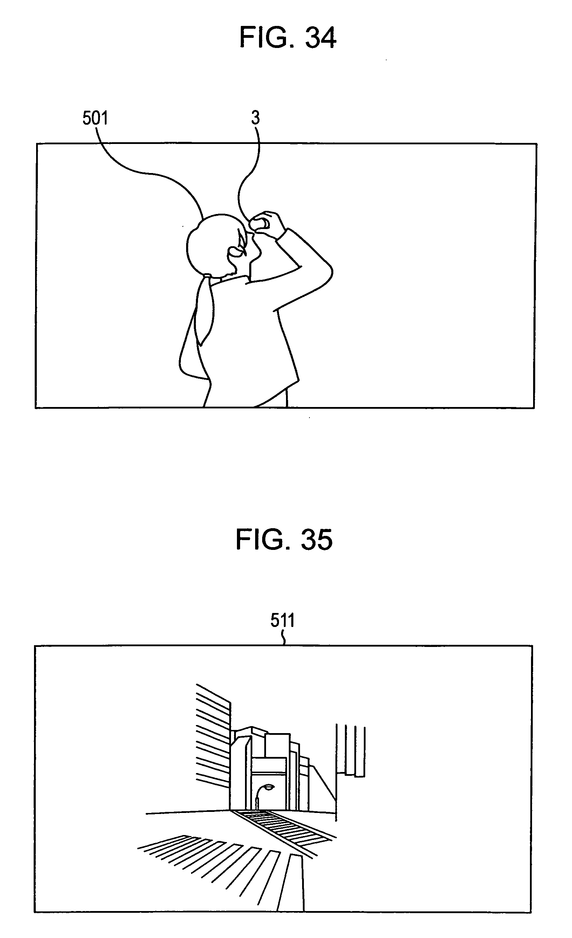

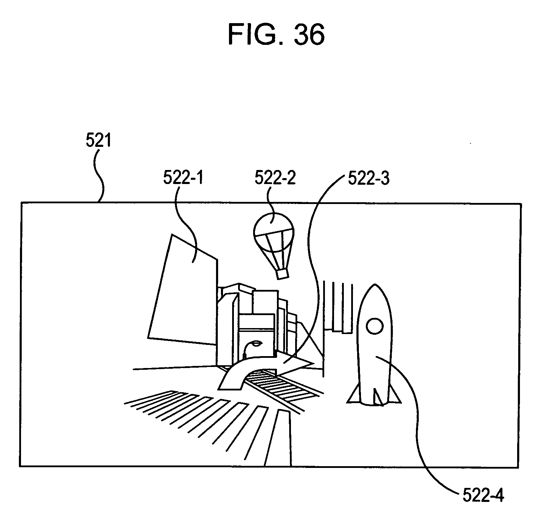

The service providing system of the present invention can display different pictures corresponding to different positions in the display 101. The display of different pictures will be specifically described with reference to Figs. 34 to 36. As shown in Fig. 34, a user 501 looks at the display 101 (not shown in Fig. 34) of the remote unit 3. The imaging unit 121 provided at a face opposing the display 101 picks up an image of a landscape within a certain angle. Fig. 35 shows an example of an image 511 picked up by the imaging unit 121. A predetermined image that is synthesized on the image 121 is displayed in the display 101. Fig. 36 shows an example in which a predetermined image that is synthesized on the image 511 in Fig. 35 is displayed in the display 101.

Referring to Fig. 36, a special picture 521 is generated by synthesizing synthesis images 522-1 to 522-4 on the image 511. Illustrations of a rocket, a balloon, and others are synthesized in Fig. 36. Although the illustrations are synthesized in Fig. 36, for example, descriptions (such as the origin of a temple) that are provided in sightseeing spots or the likes may be synthesized and displayed.

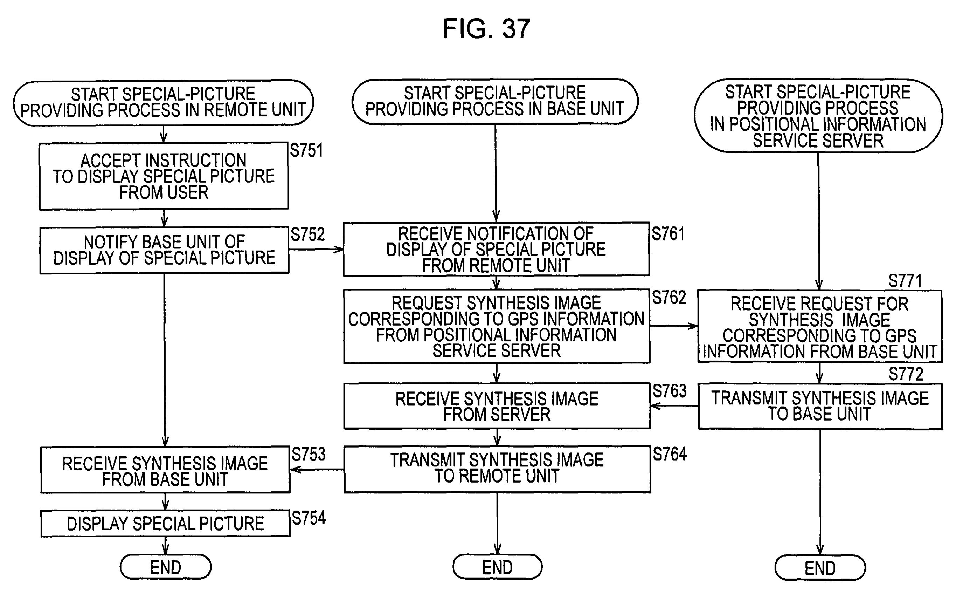

A process of synthesizing a synthesis image on a picked up image and displaying the synthesized picture in the display 101, that is, the special-picture providing process will now be described with reference to the flowchart in Fig. 37.

In Step S751, the remote unit 3 accepts an instruction to display a special picture, for example, through the operation unit 156. In Step S752, the CPU 151 in the remote unit 3 acquires the GPS information through the GPS detecting unit 125 to transmit the acquired GPS information to the base unit 2 through the Bluetooth communication unit 126 and to notify the base unit 2 that the instruction to display the special picture is input.

In Step S761, the CPU 201 in the base unit 2 receives the GPS information and the notification that the instruction to display the special picture is input, transmitted by the remote unit 3 in Step S752, through the Bluetooth communication unit 221. In Step S762, the CPU 201 in the base unit 2 transmits the GPS information received in Step S761 to the positional information service server 7 through the wireless LAN communication unit 225 and requests a synthesis image corresponding to the GPS information from the positional information service server 7.

In Step S771, the CPU 401 in the positional information service server 7 receives the GPS information and the request for a synthesis image corresponding to the GPS information, transmitted by the base unit 2 in Step S762. The positional information service server 7 associates the synthesis image with the GPS information and stores the associated image in the HDD 404. In Step S772, the CPU 401 in the positional information service server 7 reads out the synthesis image corresponding to the GPS information, received in Step S771, from the HDD 404 and transmits the readout synthesis image to the base unit 2 through the communication unit 411.

In Step S763, the CPU 201 in the base unit 2 receives the synthesis image transmitted by the positional information service server 7 in Step S772 through the wireless LAN communication unit 225. In Step S764, the CPU 201 in the base unit 2 transmits the synthesis image to the remote unit 3 through the Bluetooth communication unit 221.

In Step S753, the CPU 151 in the remote unit 3 receives the synthesis image transmitted by the base unit 2 in Step S764 through the Bluetooth communication unit 221 and stores the received synthesis image in the RAM 153. In Step S754, the CPU 151 in the remote unit 3 synthesizes the synthesis image stored in the RAM 153 in Step S753 on the picture (moving image or still image) picked up by the imaging unit 121 and displays the picture in the display 101.

The special-picture providing process is performed in the manner described above. Performing the special-picture providing process can improve the level of entertainment.

In Step S752, the CPU 151 in the remote unit 3 may transmit the image picked up by the imaging unit 121 to the base unit 2, in addition to the GPS information and the notification that the instruction to display the special picture is input, and may store the synthesis image in the RAM 153 along with image transmitted here.

As described above, according to the present invention, the user who carries the remote unit 3 having the sensors and the base unit 2 selecting information to be presented to the user can automatically perform the sensing in the base unit 2 and the remote unit 3, can detect the situation (problem) of the user, and can perform the problem solving, without operating the keyboard and/or mouse of a personal computer, unlike conventional cases.

Selecting information to be presented to the user in the base unit 2 can reduce the management cost in the server, compared with a case in which the server selects information to be presented to the user, and also can eliminate the time lag due to the communication with the server.

When the server selects information to be presented to the user as in conventional cases, it is necessary for all the relevant servers to properly operate. In contrast, according to the present invention, since the need for the server that selects information to be presented to the user is eliminated, the useful information can be stably provided to the user, independent of the operation state of the server.

The series of processes may be performed by hardware or by software. When the series of processes are performed by the software, the programs in the software are installed in a computer incorporated in dedicated hardware or in, for example, a general-purpose personal computer capable of performing various functions by installing various programs, over a network or from a recording media.

As shown in Fig. 7 and Figs. 9 to 12, the recording media includes not only package media including the magnetic disk 241 (including a flexible disk), 321, 371, and 421; the optical disk 242 (including a compact disk read only memory (CD-ROM) and a digital versatile disk (DVD)), 322, 372, and 422; the magneto-optical disk 243 (including a minidisc (MD)), 323, 373, and 423; or semiconductor memory 244, 324, 374, and 424, which has the programs recorded therein and which is distributed for providing the programs to the user, independent of the main unit, but also the ROM 152, 302, 352, and the 402; the storage unit 154; and the HDD 223, 304, 354, and 404, which have the programs recorded therein and which are provided to the user in a state incorporated in the main unit.

In this description, the steps describing the programs recorded on the recording medium may be performed in the described order in time series or may be performed in parallel or individually.

In this description, a system represents the overall system including a plurality of apparatuses.

### Industrial Applicability

As described above, according to a first aspect of the present invention, useful information can be provided to a user.

According to the first aspect of the present invention, it is possible to reduce leakage of private information of the user.

According to a second aspect of the present invention, information suited to the situation of the user can be presented to the user.

According to the second aspect of the present invention, it is possible to reduce leakage of private information of the user.

According to a third aspect of the present invention, information suited to the situation of the user can be selected.

According to the third aspect of the present invention, it is possible to reduce leakage of private information of the user.

According to a fourth aspect of the present invention, it is possible to select presentation information that is presented to the user by another information processing apparatus.

According to the fourth aspect of the present invention, it is possible to reduce leakage of private information of the user.

## Claims

1. A service providing system comprising a first information processing apparatus that acquires user information, which is the information concerning a user, a second information processing apparatus that provides accumulated information on a network, and a third information processing apparatus which the user carries along with the first information processing apparatus,
wherein the first information processing apparatus includes:
acquiring means for acquiring the user information;
first communication means for transmitting the user information acquired by the acquiring means to the third information processing apparatus and receiving presentation information to be presented to the user from the third information processing apparatus; and
presenting means for presenting the presentation information received by the first communication means,
wherein the second information processing apparatus includes:
second communication means for transmitting the accumulated information to the third information processing apparatus,
wherein the third information processing apparatus includes:
third communication means for receiving the user information from the first information processing apparatus;
fourth communication means for receiving the accumulated information from the second information processing apparatus; and
selecting means for selecting the presentation information from among the accumulated information based on the user information, and
wherein the third communication means transmits the presentation information selected by the selecting means to the first information processing apparatus.

2. An information processing apparatus comprising:
acquiring means for acquiring user information, which is the information concerning a user;
communication means for transmitting the user information acquired by the acquiring means to another information processing apparatus and receiving presentation information to be presented to the user from the other information processing apparatus; and
presenting means for presenting the presentation information received by the communication means,
wherein the user carries the information processing apparatus along with the other information processing apparatus.

3. The information processing apparatus according to Claim 2,
wherein the acquiring means includes a GPS antenna, and
wherein the user information includes information concerning the longitude and latitude of a location of the user.

4. The information processing apparatus according to Claim 2,
wherein the acquiring means includes a microphone, and
wherein the user information includes audio information spoken by the user.

5. The information processing apparatus according to Claim 2,
wherein the presentation information includes article information of an article expected to be desired by the user.

6. The information processing apparatus according to Claim 2,
wherein the presenting means has displaying means for displaying the presentation information.

7. The information processing apparatus according to Claim 2,
wherein the presenting means has outputting means for outputting a sound associated with the presentation information.

8. The information processing apparatus according to Claim 2,
wherein the communication means performs communication with the other information processing apparatus using a Bluetooth technology.

9. The information processing apparatus according to Claim 2, further comprising attracting means for attracting the user's attention to the information processing apparatus when the presenting means presents the presentation information.

10. An information processing method used in an information processing apparatus which a user carries along with another information processing apparatus, the information processing method comprising the steps of:
acquiring user information, which is the information concerning the user;
transmitting the user information acquired in the acquiring step to the other information processing apparatus;
receiving presentation information to be presented to the user from the other information processing apparatus; and
presenting the presentation information received in the receiving step.

11. A program causing a computer to perform the steps of:
acquiring user information, which is the information transmitted to an information processing apparatus and which is the information concerning a user; and
presenting presentation information to be presented to the user when the presentation information is received from the information processing apparatus.

12. An information processing apparatus connected to a network, the information processing apparatus comprising:
communication means for receiving information concerning the location of a user from another information processing apparatus that selects presentation information to be presented to the user from among accumulated information that is held by the information processing apparatus and that includes article information of articles sold in a shop; and
acquiring means for acquiring the article information of the articles sold in the shop where the user is located based on the information concerning the location of the user received by the communication means,
wherein the communication means transmits the article information acquired by the acquiring means to the other information processing apparatus.

13. The information processing apparatus according to Claim 12, further comprising generating means for generating routing information for guiding the user to a specified location,
wherein the communication means further transmits the routing information generated by the generating means to the other information processing apparatus.

14. An information processing method used in an information processing apparatus connected to a network, the information processing method comprising the steps of:
receiving information concerning a location of a user from another information processing apparatus that selects presentation information to be presented to the user from among accumulated information that is held by the information processing apparatus and that includes article information of articles sold in a shop;
acquiring the article information of the articles sold in the shop where the user is located based on the information concerning the location of the user received in the receiving step; and
transmitting the article information acquired in the acquiring step to the other information processing apparatus.

15. A program causing a computer to perform an acquiring step of acquiring article information of articles sold in a shop where a user is located as information to be transmitted to another information processing apparatus that selects presentation information to be presented to the user from among accumulated information that is held in an information processing apparatus and that includes the article information of the articles sold in the shop, based on information concerning the location of the user, when the information concerning the location of the user is received from the other information processing apparatus.

16. An information processing apparatus which a user carries along with another first information processing apparatus, the information processing apparatus comprising:
first communication means for receiving user information, which is the information concerning the user, from the other first information processing apparatus;
second communication means for receiving accumulated information accumulated in another second information processing apparatus from the other second information processing apparatus; and
selecting means for selecting the presentation information to be presented to the user from among the accumulated information based on the user information,
wherein the first communication means transmits the presentation information selected by the selecting means to the first information processing apparatus.

17. The information processing apparatus according to Claim 16,
wherein the user information includes information concerning the longitude and latitude of a location of the user.

18. The information processing apparatus according to Claim 16,
wherein the user information includes audio information spoken by the user, acquired by the other first information processing apparatus, and
wherein the information processing apparatus further comprises analyzing means for analyzing the audio information.

19. The information processing apparatus according to Claim 18,
wherein the selecting means selects the presentation information to be presented to the user from among the accumulated information based on the analysis result in the analyzing means.

20. The information processing apparatus according to Claim 16,
wherein the accumulated information includes article information of articles sold in a shop, and
wherein the selecting means selects an article expected to be desired by the user from among the articles sold in the shop based on the article information of the articles sold in the shop and the article information of the selected article is the presentation information.

21. The information processing apparatus according to Claim 20, further comprising determining means for determining whether the user is present in the shop,
wherein the selecting means selects the article expected to be desired by the user from among the articles sold in the shop where the user is present, determined by the determining means.

22. The information processing apparatus according to Claim 16,
wherein the first communication means performs communication with the other first information processing apparatus using a Bluetooth technology.

23. The information processing apparatus according to Claim 16, further comprising storage means for storing the user information received by the first communication means and the accumulated information received by the second communication means.

24. An information processing method used in an information processing apparatus which a user carries along with another first information processing apparatus, the information processing method comprising:
a first receiving step of receiving user information, which is the information concerning the user, from the other first information processing apparatus;
a second receiving step of receiving accumulated information accumulated in another second information processing apparatus from the other second information processing apparatus;
a selecting step of selecting the presentation information to be presented to the user from among the accumulated information based on the user information; and
a transmitting step of transmitting the presentation information selected in the selecting step to the first information processing apparatus.

25. A program causing a computer to perform a selecting step of selecting presentation information to be presented to a user by a first information processing apparatus from among accumulated information that is received from another second information processing apparatus and that is accumulated in the other second information processing apparatus, based on user information which is received from the other first information processing apparatus and which is the information concerning the user.
